(19) Europäisches Patentamt
European Patent Office
Office européen des brevets

(11) **EP 3 722 800 B1**

(12) **EUROPÄISCHE PATENTSCHRIFT**

(45) Veröffentlichungstag und Bekanntmachung des Hinweises auf die Patenterteilung:
**22.02.2023   Patentblatt 2023/08**

(21) Anmeldenummer: **19168531.2**

(22) Anmeldetag: **10.04.2019**

(51) Internationale Patentklassifikation (IPC):
**G01N 27/90** (2006.01)   **G01N 29/24** (2006.01)
**G01N 29/44** (2006.01)

(52) Gemeinsame Patentklassifikation (CPC):
**G01N 27/9046; G01N 29/2412; G01N 29/4427; G01N 29/4436; G01N 29/4472; G01N 29/4481**

(54) **VERFAHREN ZUR BESTIMMUNG DER GEOMETRIE EINER FEHLSTELLE AUF BASIS ZERSTÖRUNGSFREIER MESSVERFAHREN UNTER VERWENDUNG VON DIREKTER INVERSION**

METHOD FOR DETERMINING THE GEOMETRY OF A DEFECT ON THE BASIS OF NONDESTRUCTIVE MEASUREMENT METHOD USING DIRECT INVERSION

PROCÉDÉ DE DÉTERMINATION DE LA GÉOMÉTRIE D'UN POINT DÉFECTUEUX SUR LA BASE D'UN PROCÉDÉ DE MESURE NON DESTRUCTIVE À L'AIDE D'UNE INVERSION DIRECTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2019   EP 19168280**

(43) Veröffentlichungstag der Anmeldung:
**14.10.2020   Patentblatt 2020/42**

(73) Patentinhaber: **Rosen Swiss AG**
**6370 Stans (CH)**

(72) Erfinder:
• **Danilov, Andrey**
**49809 Lingen (DE)**
• **Peußner, Matthias**
**49492 Westerkappeln (DE)**

(74) Vertreter: **Wischmeyer, André et al**
**Busse & Busse**
**Patent- und Rechtsanwälte**
**Partnerschaft**
**Großhandelsring 6**
**49084 Osnabrück (DE)**

(56) Entgegenhaltungen:
**WO-A1-2016/007267     US-A1- 2016 245 779**

**Beschreibung**

Die vorliegende Erfindung betrifft ein Verfahren zur Bestimmung der Geometrie einer Fehlstelle sowie ein Verfahren zur Bestimmung einer Belastbarkeitsgrenze eines zumindest im Betrieb druckbelasteten Objekts.

Derartige Objekte werden mittels zerstörungsfreier Messverfahren auf Fehlstellen untersucht. Die Ergebnisse der Messverfahren werden ausgewertet, um auf die Art und/oder Größe von Fehlstellen zurückschließen zu können. Hiervon ausgehend kann dann bestimmt werden, wie stark das Objekt beispielsweise belastet werden kann oder ob und in welchem Umfang Reparaturmaßnahmen oder ein Austausch des Objekts nötig sind. Um unnötige Maßnahmen zu verhindern, kommt es darauf an, die Fehlstellen und ihre Geometrie möglichst genau beschreiben zu können.

Ein Beispiel für ein derart zu untersuchendes Objekt ist eine Pipeline. Eine der wesentlichen Aufgaben von Pipelineinspektionen, insbesondere mit sogenannten intelligenten Molchen ist die Vorhersage sicherer Betriebsbedingungen, die sich aus dem Zustand der Pipeline ergeben. Insbesondere interessiert Pipeline-Betreiber der Zustand etwaiger Schweißnähte und die Anzahl und Größe von Fehlstellen. Fehlstellen sind beispielsweise Bereiche mit Metallverlusten aufgrund von Korrosion, Rissen oder anderen Schwächungen einer Wand eines insbesondere zur Bevorratung oder zum Transport von flüssigen oder gasförmigen Medien vorgesehenen Objekts. Hierzu zählen beispielsweise Rohre, Pipelines oder Tanks.

Die Kenntnis des für eine Pipeline geltenden Maximaldrucks ("burst pressure"), ab dem die Pipeline zerstört wird, ist relevant für die in der Pipeline einstellbaren Betriebsdrücke. Der burst pressure wird zur quantitativen Bestimmung der Belastbarkeitsgrenze verwendet. Entsprechend ist die genaue Vorhersage dieses Drucks wichtig. Aktuell wird für die Berechnung dieses Grenzwerts eine Fehlstelle lediglich hinsichtlich ihrer Länge, Breite und Tiefe angenähert und mithin als Box betrachtet. Gerade für Metallverluste aufgrund von Korrosion auf der Außen- oder Innenseite einer Pipeline ist diese gebotene konservative Betrachtungsweise allerdings nachteilig, da die vereinfachten geometrischen Figuren die aktuelle Struktur der Fehlstelle notwendigerweise überschätzen. Dies führt zu der Unterschätzung des burst pressures des Objekts und somit zur Unterschätzung der erlaubten Betriebsdrücke. Ein mit höherem Druck betreibbares Objekt wie eine Pipeline oder ein Gastank kann jedoch deutlich ökonomischer betrieben werden.

Während MFL-Untersuchungen vorzugsweise für Auffinden von Fehlstellen aufgrund von Korrosion eingesetzt werden, werden weitere, insbesondere Ultraschall ausnutzende Verfahren für die Detektion von Rissen an der Innen- oder Außenseite eines Objekts eingesetzt. Zu diesen zerstörungsfreien Messverfahren zählen elektromagnetisch-akustische Verfahren (EMAT-Verfahren), bei denen aufgrund von Wirbelstrom-induzierten Magnetfeldern Schallwellen, insbesondere in Form von geführten Wellen, in der Rohrwand des zu untersuchenden Objekts erzeugt werden, sowie direkt Ultraschall in die Objektwand einleitende Verfahren, nachfolgend Ultraschall-Verfahren genannt. Oberflächennahe, insbesondere kleinere Risse werden im Stand der Technik ebenfalls mit Wirbelstrom-Messverfahren, nachfolgend EC-Messverfahren genannt, gesucht.

Es ist Stand der Technik für die Messung der Korrosion eines Objekts Scans magnetischer Streufluss-Daten (MFL-Daten) aufgrund von magnetischen Streuflussmessungen (MFL-Messungen) zur Bestimmung der Größe der (Korrosions-) Fehlstellen von speziell geschulten Personen auswerten zu lassen. Gleiches gilt für die Auswertung von aufgrund von EMAT-, UT- und EC-Messverfahren gewonnen Messdaten. Die in den Scans angezeigten Signale werden in Boxen parametrisiert und ausgewertet. Die für dieses auch Sizing genannte Bewerten der Messergebnisse notwendigen Annahmen sind einerseits proprietär. Andererseits ist die Interpretation der Messergebnisse stark durch die Erfahrungswerte der auswertenden Personen beeinflusst. Letztlich kann die Qualität der Vorhersagen lediglich anhand von Untersuchungen der Pipeline vor Ort sichergestellt werden. Dies geht wiederum mit hohen Kosten für die Betreiber einher. Der meistverbreitete Industriestandard API 1163 beschreibt die nachteiligen Effekte dieses vereinfachten Ansatzes. Es ist gut dokumentiert, dass die Qualität dieses Ansatzes stark von der Kenntnis der betrachtenden Personen abhängt. Die in der Praxis durchgeführten Ansätze sind immer eine durch subjektive Faktoren beeinflusste Interpretation der durch einen Messlauf mit einem jeweiligen zerstörungsfreien Messverfahren erhaltenen Daten.

Patentdokument WO-A-2016/007267 offenbart ein Verfahren zur Bestimmung der Geometrie einer oder mehrerer realer, untersuchter Fehlstellen eines metallischen Objekts, mittels eines auf Basis eines zerstörungsfreien Messverfahrens erzeugten Referenzdatensatzes des Objekts. Patentdokument US-A-2016/0245779 offenbart die Verwendung von verschiedenen zerstörungsfreien Messverfahren bei der Prüfung eines Objekts. Die erhaltenen Datensätze erzeugen durch Inversion Vorhersagedatensätze, die in einem iterativen Prozess verwendet werden.

Besonders problematisch ist schließlich das gemeinsame Auftreten mehrerer Typen von Fehlstellen bzw. Defekten wie Korrosion und Cracks (Rissen), insbesondere in komplexeren Geometrien wie z.B. Schweißnähten. Vor dem Hintergrund immer höher werdender Anforderungen an die Sicherheit z.B. von Pipelines wird bei dem kombinierten Auftreten von Defekten mit hohen Sicherheitsabschlägen hinsichtlich des burst pressures gearbeitet. Eine Pipeline wird hierbei in der Regel deutlich unterhalb des maximal zulässigen Drucks betrieben.

Darüber hinaus sind aus der wissenschaftlichen, d.h. theoretischen Betrachtung Ansätze bekannt, bei denen über sukzessive Variation und iterative Methoden einer angenommenen Fehlstellengeometrie eine möglichst genaue Simulation der gemessenen Signale über Vorwärtsmodelle erreicht werden soll. Hierbei kommen beispielsweise neuronale Netze zum Einsatz. Theoretisch können diese Ansätze Lösungen im Sinn einer sich ergebenden Fehlstellengeometrie ergeben, allerdings sind diese Lösungen nicht notwendigerweise realistisch. Dies gilt insbesondere für komplexe Datensätze, die unter bestimmten Inversproblemen zu unerwarteten, exotischen und falschen Lösungen führen. Während in genau definierten und abgegrenzten Testszenarien solche wissenschaftlichen Modelle eine Lösung des beschriebenen Problems in Form von Fehlstellengeometrien ergeben, ist dies für reale Messdaten, die eine Vielzahl von Störeinflüssen aufweisen, bislang noch nicht erfolgreich gewesen.

Die Aufgabe der vorliegenden Erfindung ist es, einen schnellen Weg zur Rekonstruktion der Geometrie einer realen Fehlstelle aufzuzeigen und eine möglichst genaue Berechnung der Belastbarkeitsgrenze eines mit einer oder mehreren Fehlstellen behafteten Objekts durchzuführen.

Die Aufgabe wird gelöst durch ein Verfahren gemäß Anspruch 1 sowie bezüglich der Bestimmung einer Belastbarkeitsgrenze, nämlich des burst pressures, durch ein Verfahren gemäß Anspruch 16. Vorteilhafte Ausgestaltung der Erfindung sind den auf diese Ansprüche rückbezogenen Unteransprüche sowie der nachfolgenden Beschreibung zu entnehmen.

Erfindungsgemäß ist vorgesehen, die Bestimmung der Geometrie einer oder mehrerer Fehlstellen mittels zumindest zweier über unterschiedliche, zerstörungsfreie Messverfahren erzeugte Referenzdatensätze des Objekts durchzuführen. Ein solches erfindungsgemäßes Verfahren zur Bestimmung der Geometrie einer oder mehrerer realer, untersuchter Fehlstellen eines metallischen und insbesondere magnetisierbaren Objekts, insbesondere eines Rohres oder eines Tanks, auf Basis zumindest zweier, über unterschiedliche, zerstörungsfreie Messverfahren erzeugter Referenzdatensätze des Objekts, umfasst eine zumindest teilweise Darstellung bzw. Abbildung des Objekts auf oder durch ein zumindest zweidimensionales, vorzugsweise dreidimensionales Objektgitter mittels einer EDV-Einheit. Erfindungsgemäß wird eine Ausgangsfehlstellengeometrie insbesondere auf dem Objektgitter oder einem zumindest zweidimensionalen Defektgitter durch Inversion von zumindest Teilen der Referenzdatensätze, insbesondere durch zumindest ein für diese Aufgaben trainiertes neuronales Netz erzeugt. Die Ausgangsfehlstellengeometrie kann dabei direkt auf das Objektgitter abgebildet oder durch dieses dargestellt werden, sie kann jedoch ebenfalls in einer Parameterdarstellung, beispielsweise auf einem zumindest zweidimensionalen Defektgitter vorliegen. Die Bestimmung der Ausgangsfehlstellengeometrie erfolgt hierbei über eine direkte Inversion. Ausgehend von dem Ergebnis, den mittels der jeweiligen unterschiedlichen zerstörungsfreien Messverfahren ermittelten Referenzdatensätzen, die auf den Ergebnissen entsprechender Messungen basieren, wird auf die Geometrie zurückgeschlossen, die für die verwendeten unterschiedlichen zerstörungsfreien Messverfahren die entsprechenden Messergebnisse zur Folge hat. Für einfache Geometrien kann eine analytisch erhaltene inverse Funktion verwendet werden. Für komplexere Objektgeometrien bzw. Fehlstellengeometrien wird die Inversion jedoch vorzugsweise durch ein für diese Aufgabe trainiertes neuronales Netz vorgenommen. Hierzu kann das neuronale Netz Ausgabe erzeugen, die einem das Objekt repräsentierenden Objektgitter zugewiesen wird. Hierdurch werden Elemente des Objektgitters, Zellen oder Knoten, Informationen über das Vorliegen von Fehlstellen zugewiesen. In der Ausgabe können auch Informationen über die Art der Fehlstelle, wie beispielsweise Risse, Korrosionsdefekte oder Laminierdefekte enthalten sein und dem Objektgitter zugewiesen werden.

Weiterhin wird erfindungsgemäß eine Bestimmung, insbesondere eine Erzeugung jeweiliger, das heißt zum zerstörungsfreien Messverfahren passender Vorhersagedatensätze auf Basis der Ausgangsfehlstellengeometrie vorgenommen. Dies erfolgt durch Simulation mittels einer Simulationsroutine oder durch Zuweisung einer zum jeweiligen Referenzdatensatz passenden Messung. Weiterhin werden zumindest Teile der Vorhersagedatensätze mit zumindest Teilen der Referenzdatensätze verglichen. In Abhängigkeit von zumindest einem Genauigkeitsmaß wird das Verfahren zur Bestimmung der Geometrie der Fehlstelle beendet oder es erfolgt zusätzlich eine iterative Anpassung der Ausgangsfehlstellengeometrie an der Geometrie der realen Fehlstelle(n). Somit kann die Geometrie der Fehlstelle oder zumindest eine erste Ausgangsfehlstellengeometrie für eine anschließende iterative Anpassung und Lösung auf eine besonders einfache und schnelle Weise erstellt werden.

Die Verwendung von zumindest zwei durch unterschiedliche zerstörungsfreie Messverfahren erhaltenen Referenzdatensätzen bei der Inversion erhöht die Zuverlässigkeit und die Genauigkeit des Verfahrens. Die Bestimmung einer Ausgangsfehlstellengeometrie, auf Basis derer für beide bzw. alle der Auswertung zugrundeliegende Referenzdatensätze Vorhersagedatensätze berechnet werden, die ausreichend mit den Referenzdatensätzen übereinstimmen, kann außer für einfachste Geometrien nicht durch eine analytisch gewonnene inverse Funktion erhalten werden. Bevorzugt wird für die Inversion daher zumindest ein neuronales Netz verwendet, das auf diese Aufgabe trainiert wurde.

Unterschiedliche zerstörungsfreie Messverfahren sind oftmals fehlstellenspezifisch, so dass sich durch die Verwendung zumindest zweier durch unterschiedliche, zerstörungsfreie Messverfahren erhaltener Referenzdatensätze insbesondere bei der Verwendung neuronaler Netze überraschende Synergieeffekte ergeben. Während beispielsweise MFL-Messdaten oftmals korrosionsspezifische Fehlstellen detektieren und EMAT-Messverfahren eher für Rissdetektion verwendet werden, hat es sich gezeigt, dass sich durch die gemeinsame Verwendung entsprechender Referenzdatensätze nicht nur eine größere Komplexität etwaiger Fehlstellen beschreiben und bestimmen lässt, sondern dass darüber hinaus aus der theoretisch vorhandenen Vielzahl von Lösungen überraschenderweise Lösungen mit unsinnigen Geometrien häufiger vermieden werden. Zurückgeführt wird dies auf die sich durch das Training des insbesondere neuronalen Netzes ergebenen Synergieeffekte durch die Betrachtung desselben Objekts und entsprechend der identischen Fehlstellengeometrie.

Vorzugsweise generiert eine Trainingssimulationsroutine durch Simulationen auf Basis verschiedener Trainingsgeometrien Trainingsdaten, mit denen ein neuronales Netz zur Inversion der Messdaten trainiert wird. Als Trainingssimulationsroutine kann auch die Simulationsroutine verwendet werden. Die Trainingsgeometrien enthalten jeweils unterschiedliche Arten von Fehlstellen, die jeweils unterschiedlich ausgebildet sind bzw. unterschiedliche Formen und Dimensionen haben. Insbesondere sind hierbei sowohl Risse als auch Korrosionsfehlstellen enthalten. Weiterhin kann die Trainingssimulationsroutine auf Basis der Trainingsgeometrien Trainingsdaten für unterschiedliche Betriebsbedingungen der zerstörungsfreien Messverfahren simulieren. Beispielsweise können für eine Trainingsgeometrie unterschiedliche Trainingsdaten für unterschiedliche Messläufe des zerstörungsfreien Messverfahrens, beispielsweise mit unterschiedlichen Abständen des Sensors vom Objekt, simuliert werden. Trainingsdaten können auch für in unterschiedlichen Objektgeometrien enthaltene Fehlstellenform, beispielsweise für eine Anordnung in einer Schweißnaht, generiert werden. Trainingsdaten sind hierbei Datenpaare aus den Objektgeometrien bzw. den die Objektgeometrien repräsentierenden Objektgittern mit und/oder ohne Fehlstellen und den auf Basis der jeweiligen Geometrien erhaltenen Referenzdatensätzen.

Vorzugsweise wird das neuronale Netz auf Basis von Daten aus einer Datenbank, die simulierte Messungen enthält, trainiert. Durch die Verwendung von bereits simulierten Messungen wird der Aufwand für das Training des neuronalen Netzes reduziert, da es dann nur noch die eigentliche Anpassung des neuronalen Netzes und nicht auch noch zusätzlich die Simulation von Trainingsdaten umfasst. Zudem kann eine solche Datenbank eine Vielzahl von unterschiedlichen Trainingsfehlstellengeometrien, einschließlich beispielsweise solcher, die in Formen von Schweißnähten vorkommen, enthalten. Vorzugsweise sind in einer entsprechenden Datenbank Daten über besonders häufig vorkommende Geometrien und/oder Arten von Fehlstellen gehäuft enthalten. Durch die Verwendung von Daten einer derartigen Datenbank wird das neuronale Netz auf die Erkennung häufig vorkommender Fehlstellengeometrien besonders gut trainiert. Zur weiteren Vereinfachung des Trainings eines neuronalen Netzes kann als Ausgangspunkt ein bereits vortrainiertes neuronales Netz verwendet werden. Ein vortrainiertes neuronales Netz kann ebenfalls mit Datenbankdaten trainiert werden, das Training wird jedoch an einem geeigneten Zeitpunkt unterbrochen. Die Eigenschaften des vortrainierten neuronalen Netzes, wie die Gewichtungen der Verbindungen werden gespeichert. Ein weiteres späteres Training eines vortrainierten neuronalen Netzes verwendet die gespeicherten Eigenschaften des Netzes als Ausgangspunkt.

Vorzugsweise werden aus der Simulation verschiedener Trainingsgeometrien erhaltene Trainingsdaten in eine derartige Datenbank eingepflegt. Hierdurch reduziert sich der Rechenaufwand, da Simulationen nicht mehrfach durchgeführt werden müssen.

Bevorzugt werden durch einen Feature Extractor, der auch als ein weiteres neuronales Netz ausgestaltet sein kann, aus einem Referenzdatensatz Eingangsdaten für das neuronale Netz extrahiert. Der Schritt der Extraktion von Eingangsdaten aus einem Referenzdatensatz ist besonders interessant für Messverfahren, die für jeden Messpunkt einen Vektor von Messdaten, beispielsweise in Form einer Zeitreihe, bestimmen. Um die Datenmenge in einem Eingangsvektor, der einem Eingangsgitterpunkt eines neuronalen Netzes zugewiesen wird, zu reduzieren, können aus den Vektoren von Messdaten der Referenzdatensätze die für die Bestimmung einer Fehlstellengeometrie relevantesten Daten ausgewählt werden. Vorzugsweise geschieht diese Auswahl über ein weiteres neuronales Netz. Dieses kann separat oder gemeinsam mit dem neuronalen Netz für die direkte Inversion trainiert werden. Dieses Vorgehen reduziert die im neuronalen Netz für die Inversion zu verarbeitende Datenmenge. Das Verfahren kann einfacher und schneller durchgeführt werden.

Vorzugsweise überführt das neuronale Netz Eingangsdaten mit einer zweidimensionalen Ortsauflösung in eine Ausgangsfehlstellengeometrie mit dreidimensionaler Ortsauflösung. Hierzu wird bevorzugt ein neuronales Netz mit einem oder mehreren convolutional layer und/oder einem oder mehreren transposed convolutional layer verwendet. Eine Eingangsschicht des neuronalen Netzes weist hierzu eine zweidimensionale Ortsauflösung auf, wobei einem Eingangspunkt der Eingangschicht ein Vektor mit mehreren Einträgen zugewiesen werden kann. Das neuronale Netz ist dazu eingerichtet, auf Basis dieser Eingangsdaten eine Ausgabe mit einer dreidimensionalen Ortsauflösung zu generieren, die als dreidimensionale Ausgangsfehlstellengeometrie verwendet oder weiter in eine entsprechende dreidimensionale Ausgangsfehlstellengeometrie überführt werden kann. Die dreidimensionale Ausgangsfehlstellengeometrie kann besonders einfach für die Berechnung eines Vorhersagedatensatzes durch die Simulationsroutine verwendet werden.

Insbesondere erfolgt eine Zuweisung der Ausgabe des neuronalen Netzes zu den Zellen des Objektgitters. Entsprechend der Ausgabe des neuronalen Netzes werden einzelne Zellen als fehlstellenbehaftet oder fehlstellenfrei gekennzeichnet. Aus dem erhaltenen Objektgitter mit generischer Fehlstellenbeschreibung können dann beispielsweise einzelne Fehlstellen, die durch Gruppen von zusammenhängenden fehlstellenbehafteten Zellen repräsentiert werden, in eine parametrische Fehlstellenbeschreibung auf einem Defektgitter überführt werden, was eine etwaige nachfolgende Betrachtung und Bearbeitung der Fehlstellengeometrie vereinfacht.

Bevorzugt erfolgt eine Klassifikation von Fehlstellen. Hierbei werden den erkannten Fehlstellen fehlstellenspezifische Informationen zugeordnet. Fehlstellen können beispielsweise unterschieden werden in Oberflächendefekte wie beispielsweise Korrosion und Defekte im Volumen wie beispielsweise Risse, Einschlüsse oder Laminierdefekte. Laminierdefekte sind hierbei Regionen, in denen einzelne das Objekt ausbildende Werkstoffe zumindest lokal nicht ausreichend miteinander verbunden sind. Hierdurch ist es möglich, die unterschiedlichen Arten von Fehlstellen, soweit nötig, in einer nachfolgenden iterativen Anpassung der Ausgangsfehlstellengeometrie durch unterschiedliche Fehlstellenmodelle zu beschreiben. Durch die zusätzlichen Informationen kann die Anpassung der Ausgangsfehlstellengeometrie in dem nachfolgenden iterativen Verfahren robuster sein, vereinfacht und/oder beschleunigt werden.

Unterschiedliche zerstörungsfreie Messverfahren sind die vorbezeichneten MFL-, EMAT-, UT-, und EC-Messverfahren. Das erfindungsgemäße Verfahren zeichnet sich insbesondere dadurch aus, dass als erster Referenzdatensatz ein Datensatz auf Basis eines MFL-, Wirbelstrom-, EMAT- oder Ultraschall-Messverfahrens und als zumindest weiterer Referenzdatensatz ein auf Basis eines weiteren aus dieser Gruppe von Messverfahren stammenden Messverfahrens erzeugter Datensatz verwendet wird. Sofern ein Messverfahren wie z.B. ein EMAT-Verfahren einen Datensatz mit mehreren Unterdatensätzen erzeugt, z.B. aufgrund mehrerer Signale aufzeichnende Sensoren, werden im Verfahren dann vorzugsweise alle Unterdatensätze verwendet. Im Fall von Referenzdaten, die mittels EMAT-Verfahren gewonnen wurden, handelt es sich bei den Referenzdatensätzen vorzugsweise um über die Zeit integrierte Amplituden ("Counts") an den jeweiligen Wandpositionen bzw. Messpositionen, die sogenannten A-Scans.

Vorzugsweise kommen zur gemeinsamen Betrachtung von insbesondere Korrosion und Rissen insbesondere Referenzdatensätze folgender Messverfahren zum Einsatz:

a) ein erster Referenzdatensatz auf Basis einer MFL-Messung und als weiterer Referenzdatensatz auf Basis einer EMAT-Messung, oder

b) ein erster Referenzdatensatz auf Basis einer MFL-Messung und als weiterer Referenzdatensatz auf Basis einer UT-Messung, oder

c) ein erster Referenzdatensatz auf Basis einer MFL-Messung, als ein erster weiterer Referenzdatensatz einer auf Basis einer EMAT-Messung, und als ein zweiter, weiterer Referenzdatensatz einer auf Basis einer EC-Messung.

Die auf Basis von MFL-Messungen erzeugten Referenzdatensätze können vorzugsweise ergänzend differenziert sein hinsichtlich der Richtung der Magnetisierung, d.h. die Varianten a), b) oder c) können somit entweder einen Referenzdatensatz auf Basis einer MFL-Messung mit Magnetisierung in axialer Richtung (MFL-A-Messverfahren) oder auf Basis einer Messung mit Magnetisierung in Umfangsrichtung (MFL-C-Messverfahren) aufweisen. "Auf Basis" eines bestimmten Messverfahrens gewonnene Referenzdatensätze stammen aus entsprechenden Messläufen ("Scans") und sind gegebenenfalls für eine automatisierte Bearbeitung im erfindungsgemäßen Verfahren aufbereitet, z.B. können sie hinsichtlich ihrer Werte normalisiert und/oder zwecks Anpassung an bestimmte Gittergeometrien interpoliert sein. Sie liegen insbesondere als zweidimensionale Datensätze mit jeweiligen Länge- oder Breite- bzw. Umfangsinformationen und diesen zugeordneten Messwerten vor.

Vorzugsweise erfolgt die iterative Anpassung der Ausgangsfehlstellengeometrie an die Geometrie der realen Fehlstellen durch wenigstens eine, vorzugsweise eine Mehrzahl von insbesondere im Wettbewerb zueinander stehenden Experten-Routinen mit jeweils zumindest einer eigenen Suchstrategie bzw. zumindest einem eigenen Algorithmus, die auf eine gleiche Ausgangsfehlstellengeometrie zurückgreifen. Die Experten-Routinen werden insbesondere parallel auf einer EDV-Einheit ausgeführt. Bei Verwendung einer einzigen Experten-Routine kann diese auf verschiedene Algorithmen zur Anpassung der Fehlstellengeometrie zugreifen.

In der bzw. den jeweiligen Experten-Routinen wird mittels wenigstens eines eigenen Algorithmus bzw. einer eigenen Suchstrategie und auf Basis der Ausgangsfehlstellengeometrie eine jeweilige Experten-Fehlstellengeometrie erzeugt.

Einen eigenen Algorithmus weist die Experten-Routine dann auf, wenn sich wenigstens einer der der Experten-Routine zur Verfügung stehenden Algorithmen zur Anpassung der Fehlstellengeometrie von den Algorithmen einer weiteren Experten-Routine zumindest teilweise unterscheidet. Vorzugsweise können stochastische Prozesse zur Differenzierung der Algorithmen unterschiedlicher Experten-Routinen verwendet werden. Jede Experten-Routine weist zumindest einen Algorithmus zur Anpassung der Fehlstellengeometrie auf, vorzugsweise stehen zumindest einer Experten-Routine mehrere Algorithmen zur Verfügung. Ebenfalls kann innerhalb einer Experten-Routine die Auswahl eines Algorithmus auf Basis stochastischer Prozesse erfolgen oder vorgegeben werden.

Vorzugsweise ist vorgesehen, dass auf Basis der jeweiligen Experten-Fehlstellengeometrie ein jeweiliger Experten-Vorhersagedatensatz, insbesondere durch Simulation oder Zuweisung einer zum jeweiligen Referenzdatensatz passenden Messung bestimmt wird, wobei die dem jeweiligen Experten-Vorhersagedatensatz zugrunde liegende Experten-Fehlstellengeometrie wenigstens einer, vorzugsweise mehreren und insbesondere allen der Experten-Routinen als neue Ausgangsfehlstellengeometrie zur weiteren Anpassung an die Geometrie der realen Fehlstelle bzw. der realen Fehlstellen zur Verfügung gestellt wird, wenn der jeweilige Experten-Vorhersagedatensatz dem jeweiligen Referenzdatensatz ähnlicher ist als der entsprechende Ausgangsvorhersagedatensatz und/oder eine die zumindest zwei Experten-Vorhersagedatensätze berücksichtigende Fitnessfunktion verbessert ist. Anschließend, d.h. für die in der Iteration nächsten Vergleiche der jeweiligen Experten-Fehlstellengeometrien mit der neuen Ausgangsfehlstellengeometrie, werden die zur neuen Ausgangsfehlstellengeometrie gehörende Experten-Vorhersagedatensätze als neue Ausgangsvorhersagedatensätze verwendet.

Ein Maß für die Ähnlichkeit kann auch über die Fitnessfunktion gebildet werden, so dass beispielsweise in einer Ausführungsvariante sogar dann eine neue Ausgangsfehlstellengeometrie von einer Experten-Routine für die weiteren Iterationsschritte bereitgestellt wird, wenn sich eine- dann allerdings wesentliche- Annäherung nur eines der simulierten oder zugewiesenen Experten-Vorhersagedatensätze an den jeweiligen Referenzdatensatz ergibt.

Ein einfacher Vergleich der Experten-Vorhersagedatensätze mit den Referenzdatensätzen auf Basis der Experten-Fehlstellengeometrie ergibt sich beispielsweise wie folgt:

$$E = \sum_i |Y_{cal}^i(x_1 \ldots x_n) - Y_m^i|,$$

wobei $Y_m^i$ das (geometrisch in der Regel zweidimensional vorliegende Messdatensignal) des $i$ - ten Messverfahrens und $Y_{cal}^i$ - das simulierte Signal des zugehörigen Messverfahrens ist. Weiterhin werden als $x_1 \ldots x_n$ die über eine oder mehrere Experten-Routinen variierten Fehlstellengeometrien bezeichnet. Je kleiner E ist, desto besser entsprechen die berechneten Fehlstellengeometrien den tatsächlich vorliegenden.

Die iterative Anpassung mittels der Experten-Routinen erfolgt schließlich solange, bis ein Stopp-Kriterium erfüllt ist. Es werden bevorzugt auf Basis derselben Ausgangsfehlstellengeometrie erzeugte (zugewiesene oder insbesondere simulierte Experten-Vorhersagedatensätze) messmethodenspezifisch mit den jeweiligen Referenzdatensätzen verglichen und damit die Nachteile der aus dem Stand der Technik bekannten getrennten Auswertung vermieden. Im messmethodenspezifischen Vergleich wird z.B. ein simulierter EMAT-Scan mit dem auf Basis der realen Messung gewonnenen EMAT-Referenzdatensatz verglichen, ein simulierter MFL-Scan mit dem auf Basis der realen Messung gewonnen MFL-Referenzdatensatz verglichen, etc..

Durch den Zugriff auf dieselbe Fehlstellengeometrie und die Überlagerung der Geometrien verschiedener Defekte kann die Berechnung des burst pressures des untersuchten Objekts um zumindest 10% - 20% genauer erfolgen und z.B. eine Pipeline mit höheren Drücken betrieben werden. Außerdem muss aufgrund der automatisierten, kombinierten Betrachtung der Referenzdatensätze unterschiedlicher Messmethoden und der sich hieraus ergebenden verbesserten Beschreibung der Defektgeometrien seltener eine In-Augenscheinnahme des untersuchten Objekts z.B. durch Ausgrabung durchgeführt werden. Darüber hinaus wird über die kombinierte Auswertung auf Basis unterschiedlicher Messverfahren gewonnener Daten das Problem singulärer, lokaler Lösungen minimiert, d.h. die Bestimmung der Fehlstellengeometrie verhält sich robuster.

Bei den insbesondere im Wettbewerb zueinander stehenden Experten-Routinen werden vorzugsweise diejenigen hinsichtlich der zur Verfügung stehenden Ressourcen der EDV-Einheit bevorzugt, die wie nachfolgend beschrieben erfolgreicher in der Annäherung an die realen Messdaten sind als andere im Wettbewerb bestehende Experten-Routinen. Ressourcen der EDV-Einheit sind insbesondere die CPU- oder GPU-Zeit und/oder die oder eine Priorisierung in der Speicherbelegung.

Vorteilhafterweise laufen die Experten-Routinen (auf der EDV-Einheit) dergestalt im Wettbewerb zueinander, dass die Verteilung der Ressourcen der EDV-Einheit, insbesondere in Form von Rechenzeit, an eine jeweilige Experten-Routine in Abhängigkeit einer Erfolgsquote, bei der insbesondere die Anzahl der von der Experten-Routine berechneten und für eine oder mehrere andere Experten-Routinen zur Verfügung gestellten Ausgangsfehlstellengeometrien berücksichtigt wird, und/oder in Abhängigkeit einer Reduktion einer Fitnessfunktion, bei der insbesondere die Anzahl der für die Reduktion erzeugten Experten-Vorhersagedatensätze berücksichtigt wird, erfolgt. Der Wettstreit der Experten-Routinen ergibt sich insbesondere dadurch, dass von dem als Überwachungsroutine ausgebildeten Programmteil den jeweiligen Experten-Routinen dann vermehrt Ressourcen insbesondere in Form von Rechenzeit, vorzugsweise CPU- oder GPU-Zeit zugewiesen wird, wenn diese erfolgreicher sind als andere Experten-Routinen. Erfolgreich ist eine Experten-Routine dann, wenn sie eine mit einer zum Referenzdatensatz passenderen beispielsweise simulierten EMAT-Messung versehene Fehlstellengeometrie gefunden hat, die den anderen Experten-Routinen zur Verfügung gestellt wird.

Hieraus kann sich zum Beispiel ergeben, dass einzelne, besonders erfolgreiche Experten-Routinen mehr als 50% der gesamten zur Verfügung stehenden Rechenzeit erhalten, was die Gesamtdauer des erfindungsgemäßen Verfahrens deutlich reduziert. Gleichzeitig kann programmseitig vorgegeben werden, dass keine oder einzelne der Experten-Routinen nicht unter einen bestimmten Prozentsatz an Rechenzeit gelangen, um das Problem von singulären und exotischen Fehlstellengeometrien bzw. -ergebnissen aus den einzelnen Routinen zu vermeiden. So kann für den Fall, dass eine bis dahin erfolgreiche Experten-Routine nur eine lokale und keine globale Lösung findet, ein Ausweg aus der ansonsten im Stand der Technik vorkommenden Blockade-Situation gefunden werden.

Die Anpassung mittels der Experten-Routinen erfolgt solange, bis ein Stopp-Kriterium erfüllt ist. Hierbei handelt es sich beispielsweise um einen residualen Unterschied bezüglich der gemessenen und simulierten Messdaten. Es kann sich auch um ein externes Stopp-Kriterium beispielsweise auf Basis der zur Verfügung stehenden Rechenzeit oder um eine insbesondere vorgebbare Anzahl von Iterationen oder eine insbesondere vorgebbare oder vorgegebene oder aus der zur Verfügung stehenden Rechenzeit bestimmte Rechenzeit handeln. Das Stopp-Kriterium kann auch eine Kombination dieser Kriterien sein.

Gemäß einer Weiterbildung des erfindungsgemäßen Verfahrens wird zusätzlich das Objektgitter automatisiert aus den Referenzdatensätzen erzeugt. Zur Bestimmung des Objektgitters erfolgt zunächst auf Basis von zumindest Teilen der Referenzdatensätze eine Klassifizierung von anomaliefreien Bereichen und anomaliebehafteten Bereichen des Objekts, wobei insbesondere auf Basis von vorbekannten Informationen über das Objekt ein Ausgangsobjektgitter erstellt wird, unter Verwendung des Ausgangsobjektgitters Vorhersagedatensätze für die jeweiligen zerstörungsfreien Messverfahren errechnet werden, ein Vergleich von zumindest Teilen der Vorhersagedatensätze mit jeweiligen Teilen der Referenzdatensätze unter Ausschluss der anomaliebehafteten Bereiche erfolgt und in Abhängigkeit von zumindest einem Genauigkeitsmaß das Ausgangsobjektgitter als die Geometrie des Objekts beschreibendes Objektgitter verwendet wird oder mittels der EDV-Einheit eine iterative Anpassung des Ausgangsobjektgitters an die Geometrie des Objekts in den anomaliefreien Bereichen erfolgt.

Anomaliebehaftete Bereiche des Referenzdatensatzes sind hier räumliche Gebiete, den von benachbarten Gebieten signifikant abweichende Messdaten zugeordnet sind. Es wird davon ausgegangen, dass diese Anomalien auf Fehlstellen zurückzuführen sind. Anomaliefreie Bereiche sind hierbei vorzugsweise zusammenhängende Gebiete, in denen sich die durch das zerstörungsfreie Messverfahren gemessenen Messwerte nicht oder nur innerhalb eines gewissen Toleranzbereiches verändern, in denen der Gradient der Veränderung unterhalb bestimmter Grenzwerte bleibt, die Abweichung einzelner Messwerte von einem Mittelwert geringer als ein bestimmter Schwellenwert ist und/oder die Abweichung eines Mittelwerts in einem lokalen Bereich von angrenzenden lokalen Bereichen unterhalb eines Schwellenwertes ist.

Für die Bestimmung des Objektgitters kann gemäß der erfindungsgemäßen Weiterbildung ein Ausgangsobjektgitter erstellt werden, wobei vorbekannte Informationen über das Objekt, bei Pipelines beispielsweise der Pipelinedurchmesser sowie die Wandstärke, verwendet werden. Ausgehend von dem Ausgangsobjektgitter werden zum jeweiligen Referenzdatensatz passende Messungen simuliert. Anschließend erfolgt ein Vergleich von zumindest Teilen des Vorhersagedatensatzes mit zumindest Teilen des zumindest einen Referenzdatensatzes, wobei die anomaliebehafteten Bereiche des Referenzdatensatzes bzw. des Objektes in dem Vergleich ausgeschlossen werden. Wenn die verglichenen Daten ausreichend genau übereinstimmen, wird das Ausgangsobjektgitter als hinreichend genaue Repräsentation der tatsächlichen Form des defektfreien Objektes angesehen und kann als Grundlage für die Auswertung der Fehlstellen verwendet werden. Andernfalls findet in der EDV-Einheit eine iterative Anpassung des Ausgangsobjektgitters an die Geometrie des Objektes in den anomaliefreien Bereichen statt.

Hierzu wird vorzugsweise ein neues Ausgangsobjektgitter erstellt und für dieses wiederum neue Vorhersagedatensätze errechnet. Ein Vergleich von zumindest Teilen der neuen Vorhersagedatensätze mit zumindest Teilen des zumindest einen Referenzdatensatzes unter Ausschluss der anomaliebehafteten Bereiche erfolgt solange, bis ein Objektstopp-Kriterium für die iterative Anpassung z.B. in Form eines Genauigkeitsmaßes erreicht wird. Das dann vorliegende Ausgangsobjektgitter wird als die Geometrie des Objekts beschreibendes Objektgitter verwendet.

Um ein Ausgangsobjektgitter zu erhalten, dass das fehlstellenfreie untersuchte Objekt im ausgewerteten Abschnitt oder in seiner Gesamtheit repräsentiert, findet vorzugsweise eine Interpolation oder Extrapolation von Informationen des Referenzdatensatzes und/oder Objektgitters von den anomaliefreien Bereichen in die anomaliebehafteten Bereiche statt. Es können beispielsweise nach der Klassifizierung der Referenzdatensätze in anomaliebehaftete und anomaliefreie Bereiche die Informationen aus den anomaliefreien Bereichen in die anomaliebehafteten Bereiche interpoliert und/oder extrapoliert werden und ein so erhaltener Hilfsreferenzdatensatz bei der Bestimmung des Objektgitters verwendet werden. Es ist auch denkbar, zunächst ein Objektgitter nur für die als anomaliefrei klassifizierten Bereiche zu erstellen. Dieses Objektgitter weist im Bereich der anomaliebehafteten Bereiche Lücken auf, die anschließend mittels Interpolation oder Extrapolation aus den anomaliefreien Bereichen geschlossen werden können. Auf diese Weise wird ein die Geometrie des Objektes repräsentierendes Objektgitter erhalten, das dann für weitere Analysen von Fehlstellen bzw. Fehlstellengeometrien in den anomaliebehafteten Bereichen verwendet werden kann.

Vorzugsweise erfolgt bei der Klassifizierung anomaliefreier Bereiche der Referenzdatensätze eine Zuordnung eines anomaliefreien Bereichs zu zumindest einem vordefinierten lokalen Element des Objektes. Dieses wird bei der Erstellung des Ausgangsobjektgitters verwendet bzw. in das Ausgangsobjektgitter eingefügt. Dieser Schritt vereinfacht das Erstellen eines Ausgangsobjektgitters. Wie oben geschildert, kann das mittels der zerstörungsfreien Messverfahren untersuchte Objekt Schweißnähte, Ein- und/oder Anbauten enthalten, oder eine anderweitig vorbekannte lokal modifizierte Geometrie aufweisen. Die Erstellung des Objektgitters kann erleichtert werden, wenn diese vorbekannten Informationen verwendet werden. Hierfür werden entsprechende Elemente, wie beispielsweise Schweißnähte, Anbauten wie Stützelemente, Klammern, Verstärkungselemente oder beispielsweise Opferanoden eines kathodischen Rostschutzes, sowie zu Reparaturzwecken angebrachte Sleeves in ihrer Form und/oder Ausdehnung vordefiniert. Die Messergebnisse der zerstörungsfreien Messverfahren sehen in diesen Bereichen naturgemäß anders aus, als in Bereichen einer unveränderten Wand des Objekts, beispielsweise der Pipelinewand bei Pipelines. Diese Änderungen sind jedoch gleichförmig und im Vergleich zu den meisten Fehlstellen großflächig. Weiterhin sind sie dadurch, dass die die Veränderung verursachenden Elemente in ihrer Lage bekannt sind, erwartbar.

Durch Vorgabe der lokalen Elemente kann in der Klassifizierung eine Erkennung durchgeführt werden, ob es sich hierbei beispielsweise um eine Schweißnaht oder um eine Stützstruktur handelt. Das so erkannte Element kann dann mit seiner bekannten generellen Form beziehungsweise generellen Abmessung bei der Erstellung des Ausgangsobjektgitters verwendet oder nachträglich an der entsprechenden Stellen in das Ausgangsobjektgitter eingeführt werden, um dieses an die tatsächliche Form des untersuchten Objektes anzupassen.

Besonders bevorzugt wird das jeweilige lokale Element, insbesondere in Form einer Schweißnaht, dabei mittels eines parametrischen Geometriemodells beschrieben. Hierdurch kann der Aufwand bei der Erstellung des Objektgitters deutlich reduziert werden. Hierzu werden die vorbekannten Informationen über das lokale Element verwendet. Über eine Schweißnaht kann beispielsweise bekannt sein, dass sie sich in Umfangsrichtung um das Objekt herum erstreckt und durch eine Schweißnahtbreite sowie eine Überhöhung ausreichend genau beschreiben lässt. Somit kann eine Anpassung eines vordefinierten parametrischen Geometriemodells eines lokalen Elements an die tatsächliche lokale Form des Objekts durch eine Variation nur weniger Parameter erfolgen. Das Verfahren zur Erstellung eines Objektgitters wird hierdurch wesentlich beschleunigt. Insbesondere bei einer iterativen Anpassung des Ausgangsobjektgitters kann eine Veränderung lediglich eines oder mehrerer Parameter des parametrischen Geometriemodells erfolgen. Die Variation einzelner Parameter kann zudem durch bestimmte Grenzwerte, innerhalb derer sie modifiziert werden können, begrenzt werden. Durch eine derartige Begrenzung kann die Gefahr minimiert werden, physikalisch unsinnige Ergebnisse zu erhalten. Die Zuverlässigkeit des Verfahrens wird erhöht.

Insbesondere stehen einer Experten-Routine mehrere Algorithmen zur Anpassung der Experten-Fehlstellengeometrie zur Verfügung. Hierbei kann es sich um Ansätze aus dem Bereich des maschinellen Lernens, der stochastischen Optimierung, empirischer und/oder numerischer Modellfunktionen handeln. Insbesondere können in den Experten-Routinen auch Erfahrungswerte auswertender Personen verwertet werden. Vorzugsweise finden in einer oder mehreren Experten-Routinen wie vorbeschrieben fehlstellenspezifische Variationen statt, d.h. einzelne Algorithmen sind auf die Variation von Korrosion, Rissen und Laminierdefekten ausgelegt. So wird ein ausreichend diverser Ansatz erzeugt, mit dem alle Lösungen zielgerichtet und unter Wettbewerbsbedingungen berücksichtigt werden können.

Insbesondere stehen einer Experten-Routine mehrere Algorithmen zur Anpassung der Experten-Fehlstellengeometrie zur Verfügung. Hierbei kann es sich um Ansätze aus dem Bereich des maschinellen Lernens, der stochastischen Optimierung, empirischer und/oder numerischer Modellfunktionen handeln. Insbesondere können in den Experten-Routinen auch Erfahrungswerte auswertender Personen verwertet werden. Vorzugsweise finden in einer oder mehreren Experten-Routinen wie vorbeschrieben fehlstellenspezifische Variationen statt, d.h. einzelne Algorithmen sind auf die Variation von Korrosion, Rissen und Laminierdefekten ausgelegt. So wird ein ausreichend diverser Ansatz erzeugt, mit dem alle Lösungen zielgerichtet und unter Wettbewerbsbedingungen berücksichtigt werden können.

Vorteilhafterweise werden in den insbesondere im Wettbewerb zueinander laufenden Experten-Routinen unterschiedliche und fehlstellenspezifische Variationen zur Erzeugung der jeweiligen Experten-Fehlstellengeometrie vorgenommen, wobei insbesondere eine erste Experten-Routine zur Variation von Rissen, eine weitere zur Variation von Korrosion und/oder eine weitere zur Variation von Laminierdefekten vorgesehen ist. Laminierdefekte, die sich in Form von nicht miteinander verbundenen Schichten einer (Objekt-) Wand z.B. bei EC-Messungen störend auswirken und insbesondere von speziellen Moden der EMAT-Messung entdeckt werden, können so getrennt berücksichtigt werden und insbesondere für die Betrachtung der Restlebenszeit z.B. einer Pipeline unberücksichtigt bleiben.

Die eingangs gestellte Aufgabe wird weiterhin durch ein Verfahren zur Bestimmung einer Belastbarkeitsgrenze eines zumindest im Betrieb druckbelasteten und insbesondere als Öl-, Gas- oder Wasserpipeline ausgebildeten Objekts gelöst, wobei bei dem Verfahren ein eine oder mehrere Fehlstellen beschriebener Datensatz als Eingangsdatensatz in einer insbesondere als Vorwärtsmodellierung ausgebildeten Berechnung der Belastbarkeitsgrenze verwendet wird, wobei der Eingangsdatensatz zunächst gemäß dem vor- oder nachbeschriebenen Verfahren zur Bestimmung der Geometrie einer Fehlstelle erzeugt wird. Die vorteilhafte Darstellung der Fehlstellengeometrie, insbesondere als nicht-parametrisierte echte dreidimensionale Geometrie bzw. als zweidimensionale Fläche mit jeweiligen Tiefenwerten, macht bisher in der Industrie als notwendig vermutete Vereinfachungen überflüssig, so dass auch aus diesem Grund eine Steigerung der Genauigkeit der Fehlstellenbestimmung als Ganzes in bisher nicht erreichbarer Weise gewährleistet wird.

War bisher die Genauigkeit auf die Angabe des Punktes der Maximaltiefe der Fehlstelle beschränkt, wird nun das gesamte Profil mit hoher Genauigkeit ermittelt. Typischerweise wird die Genauigkeit der Maximaltiefe auf das in Abhängigkeit der Messgenauigkeit erreichbare Maß reduziert, also etwa ± 5% der Wandstärke im Vergleich zu bisher etwa ± 10% der Wandstärke bei dem Sizing nach dem eingangs beschriebenen Stand der Technik. Allerdings erreicht die Vorhersage der Belastbarkeitsgrenze in Abhängigkeit von der Geometrie der Fehlstelle gerade für kritische Fälle in der Genauigkeit Steigerungen von beispielsweise bisher ±50% auf nun ±5%. Der erfindungsgemäße Vorteil liegt somit insbesondere in einer erstmalig erreichten adäquaten Darstellung der Fehlstellengeometrie, die genau diese Steigerung erst ermöglicht.

Weitere Vorteile und Einzelheiten der Erfindung können der nachfolgenden Figurenbeschreibung entnommen werden. Schematisch dargestellt zeigt:

Fig. 1: einen Ablauf eines Ausführungsbeispiels eines Verfahrens zur Erstellung einer Ausgangsfehlstellengeometrie,

Fig. 2: ein Verfahren zum Erstellen von Trainingsdaten eines neuronalen Netzes,

Fig. 3: ein Ablaufdiagramm über die Funktionsweise des neuronalen Netzes.

Fig. 4 eine schematische Darstellung einer Weiterbildung des erfindungsgemäßen Verfahrens,

Fig. 5 eine nähere Erläuterung eines Teils der Fig. 4,

Fig. 6A - 6F Referenzdatensätze und Ergebnis eines erfindungsgemäßen Verfahrens im Vergleich mit einem zugehörigen Geometriescan,

Fig. 7 ein Flussdiagramm eines Ausführungsbeispiels eines erfindungsgemäßen Verfahrens,

Fig. 8 eine Veranschaulichung einer Parameter-Darstellung einer Schweißnaht.

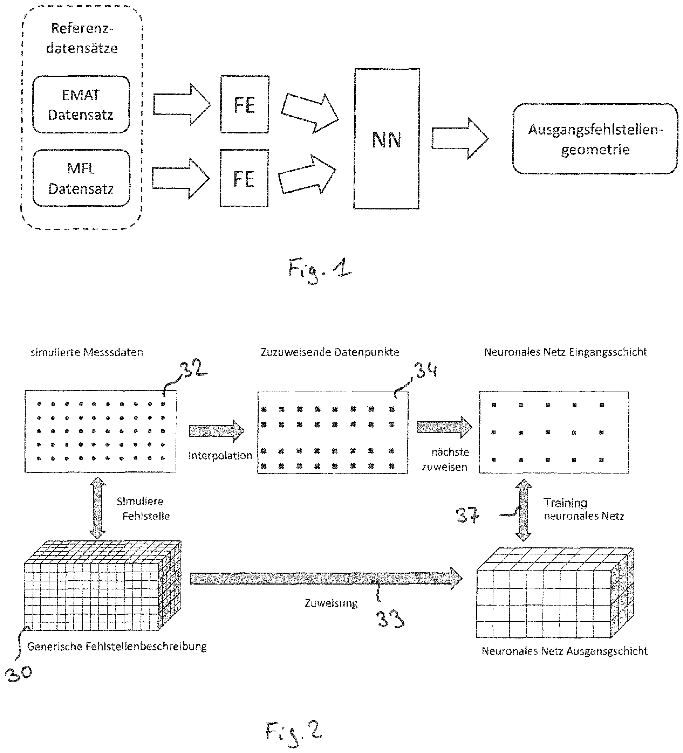

Fig. 1 zeigt einen Teil eines Ausführungsbeispiels eines Verfahrens zur Bestimmung der Geometrie einer oder mehrerer realer untersuchter Fehlstellen. Aus einem kombinierten Datensatz, vorliegend umfassend Referenzdatensätze, die durch zwei unterschiedliche zerstörungsfreie Messverfahren (EMAT und MFL) gewonnen wurden, werden über jeweilige Feature Extraktoren (FE) Daten entnommen und in ein neuronales Netz (NN) übergeben. Die Feature Extraktoren (FE) können hierbei durch weitere neuronale Netze gebildet werden. Auf Basis dieser Daten wird über das neuronale Netz (NN) eine Ausgangsfehlstellengeometrie erzeugt, die den durch beide bzw. alle durchgeführte zerstörungsfreie Messverfahren erhaltenen Referenzdatensäten zugrunde liegen könnte. Hierzu wird dem neuronalen Netz (NN) ein Eingang zugewiesen, der in einem oder mehreren Vektoren bestehen kann, die eine zweidimensionale Ortsauflösung repräsentieren. Das neuronale Netz (NN) gibt einen Vektor aus, der eine dreidimensionale Ortsauflösung repräsentiert. Dieser kann einem Objektgitter zugewiesen werden, wobei einzelne Zellen des Objektgitters als fehlstellenbehaftet gekennzeichnet werden, z.B. durch die Zuweisung eines Wertes "keine Material" oder "Material mit Fehlstelle". Bei dieser Kennzeichnung kann zusätzlich vorzugsweise nach Art der Fehlstelle wie beispielsweise Risse, Korrosion oder Laminierdefekte unterschieden werden.

Fig. 2 zeigt das Erstellen von Trainingsdaten für ein entsprechendes neuronales Netzes (NN), sowie die Verwendung dieser Daten für das Training. Aus einer generischen Beschreibung der Fehlstelle 30 auf einem Objektgitter werden in Schritt 31 die mittels eines zerstörungsfreien Messverfahrens auf einer entsprechenden Fehlstellengeometrie erhaltenen Messdaten 32 simuliert oder aus einer Datenbank zugewiesen. Diese liegen mit einer zweidimensionalen Ortsauflösung vor. Das neuronale Netz (NN) weist eine Eingangsschicht (ES) auf, deren Eingangspunkte eine zweidimensionale Ortsauflösung repräsentieren. Das neuronale Netz (NN) ist eingerichtet, eine Ausgabe mit dreidimensionaler Ortsauflösung zu generieren, die als generische Fehlstellenbeschreibung 30 verwendet oder in einer solche überführt wird. Einzelne Daten der Messdaten 32 werden den einzelnen Gitterpunkten der Eingangsschicht des neuronalen Netzes zugewiesen (Schritt 34). Gleichzeitig wird aus der generischen Fehlstellenbeschreibung die Lage der Fehlstellen auf dem Objektgitter entnommen. Hierbei werden diejenigen Zellen, in die oder durch die sich die Fehlstellen erstrecken als fehlstellenbehaftet markiert. Dies geschieht durch Zuweisung eines entsprechenden Wertes. Jede Zelle des Objektgitters wird mit der entsprechenden Information, ob diese mit einer Fehlstelle behaftet ist sowie gegebenenfalls der Art der Fehlstelle der Ausgangsschicht des neuronalen Netzes zugewiesen (Schritt 33). Mit diesen Datenpaaren wird das neuronale Netz in Schritt 37 trainiert. Ein Training des neuronalen Netzes kann dann beispielsweise durch Vergleich der aus den der Eingangsschicht (ES) zugewiesenen Daten folgenden Ausgabe mit den entsprechenden der Ausgangsschicht des neuronalen Netzes zugewiesenen Daten und eine Anpassung von Gewichtungsfaktoren im neuronalen Netz durch backpropagation erfolgen. Auf diese Weise wird das neuronale Netz (NN) mit einer Vielzahl von Trainingsdatensätzen trainiert. Wenn die Feature Extraktoren (FE) ebenfalls als neuronale Netz eingerichtet sind, kann deren Training gleichzeitig auf Grundlage der gleichen Trainingsdaten erfolgen.

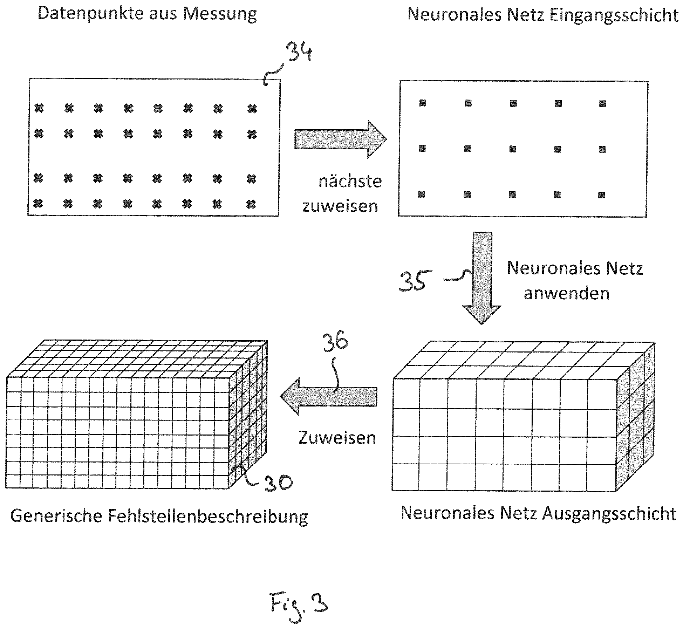

Fig. 3 zeigt die Auswertung von Messdaten eines zerstörungsfreien Messverfahrens mittels des neuronalen Netzes (NN). Messwerte der durchgeführten zerstörungsfreien Messverfahren werden den Eingangspunkten der Eingangsschicht (ES) des neuronalen Netzes (NN) zugewiesen (Schritt 34). Bei den Messwerten handelt es sich um Messwerte aus einem oder mehreren Referenzdatensätzen. Das neuronale Netz (NN) erzeugt in Schritt 35 ein Ausgabe, die dreidimensionale Ortskoordinaten repräsentier. Diese Ausgabe wird für die Erstellung einer generellen Defektbeschreibung, vorliegend in Form einer Ausgangsfehlstellengeometrie verwendet. Hierzu erfolgt in Schritt 36 eine Zuweisung der Ausgabe des neuronalen Netzes zu den Zellen des Objektgitters 30. Entsprechend der Ausgabe des neuronalen Netzes werden einzelne Zellen als fehlstellenbehaftet oder fehlstellenfrei gekennzeichnet. Zusätzlich können gegebenenfalls Informationen über die Art der jeweiligen Fehlstelle, z.B. Riss, Korrosion, Laminierdefekt, zugewiesen werden. Aus dem erhaltenen Objektgitter mit generischer Fehlstellenbeschreibung können dann beispielsweise einzelne Fehlstellen, die durch Gruppen von zusammenhängenden fehlstellenbehafteten Zellen repräsentiert werden, in eine parametrische Fehlstellenbeschreibung auf einem Defektgitter überführt werden.

Bei dem erfindungsgemäßen Verfahren wird gemäß einem Ausführungsbeispiel die Oberfläche eines Rohres durch eine 2D Mesh-Oberfläche dargestellt. Die Fehlstellengeometrie kann parametrisiert als Vektor von Tiefenwerten D beschrieben werden, die auf einem Defektgitter liegen. Diese Fehlstellengeometrie wird auf Basis eines Ergebnisses für eine zu der jeweiligen Geometrie gehörenden Mess- und Simulationsdaten berücksichtigenden Fitnessfunktion $F(x_1...x_n)$ mit der Ausgangsfehlstellengeometrie verglichen. Hierbei wird angenommen, dass je geringer der Wert einer Fitnessfunktion ist, desto näher die angenommene Experten-Fehlstellengeometrie an der realen Geometrie ist:

$$F(x_1 \ldots x_n) = \sum_i \left\| Y_{cal}^i(x_1 \ldots x_n) - Y_m^i \right\| + R(x_1 \ldots x_n)$$

Hierbei ist i die Anzahl der gleichzeitig zu behandelnden Datensätze (reale bzw. simulierte-Datensätze), $Y_{cal}^i$ das Ergebnis einer Simulation der entsprennd i-ten-Messung, $Y_m^i$ sind die gemessenen Daten der jeweiligen Referenzdatensätze, und $R(x_1 ... x_n)$ ist ein Regularisierungsterm, der bei Mehrdeutigkeiten z.B. aufgrund mehrerer Minima eingesetzt werden und wie folgt angesetzt werden kann:

$$R(x_1 \ldots x_n) = \alpha \| (x_1 \ldots x_n) \|,$$

wobei $\alpha$ ein Skalierungsterm ist.

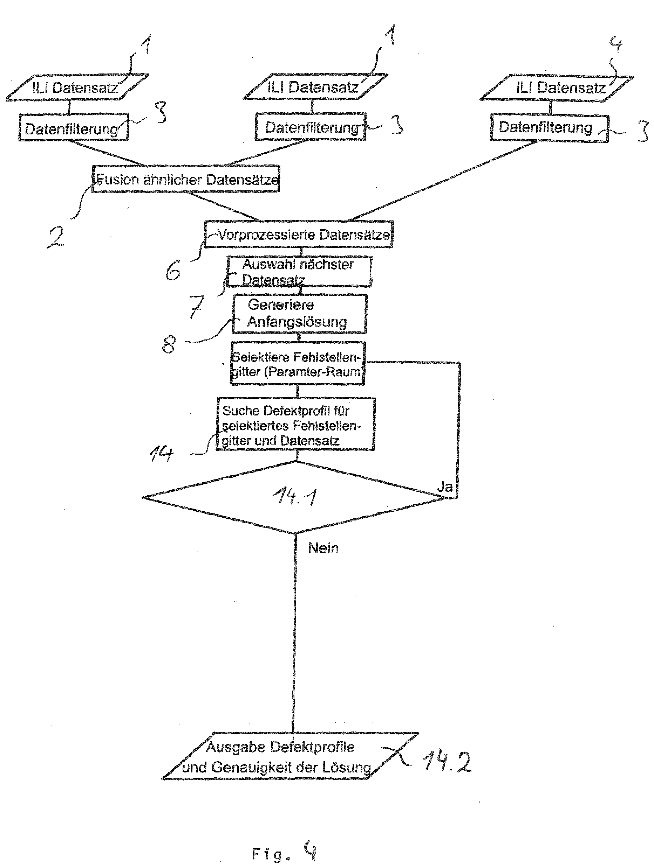

Der Verfahrensablauf gemäß einer Weiterbildung ist zumindest abschnittsweise nachfolgend gemäß Fig. 4 beschrieben, wobei eine Mehrzahl der parallel und im Wettbewerb stehenden Experten-Routinen 11 lediglich mit einem Block 14 beschrieben ist.

Als Eingangsdatensätze können beispielsweise mehrere Läufe desselben MFL-Pipelinemolches gemäß Box 2 zusammengeführt werden. Beide Datensätze 1 können zwecks besserer Zusammenführung vorher gefiltert werden und aneinander angeglichen werden (Verfahrensschritt 3), beispielsweise um etwaige Artefakte oder Hintergrundrauschen zu reduzieren. Darüber hinaus wird ein weiterer Datensatz 4 auf Basis eines weiteren Messverfahrens als zusätzlicher Referenzdatensatz in der zugehörigen Box 3 aufbereitet und zwecks Angleichung an identische Gitterstrukturen gefiltert, verwendet, so dass gemäß Verfahrensabschnitt 6 zwei angeglichene Referenzdatensätze, die auf Basis von verschiedenen zerstörungsfreien Messmethoden geschaffen wurden, vorhanden sind.

Genau aneinander angepasste Datensätze können gemeinsam behandelt werden, wobei das erfindungsgemäße Verfahren die gleichzeitige Behandlung der Datensätze durch Verwendung einer Fitnessfunktion, die die zusammen zu betrachtenden Datensätze berücksichtigt, realisiert.

Im Schritt 7 wird auf die in Schritt 6 vorhandenen Referenzdatensätze zugegriffen, wozu in Schritt 8 zunächst eine anfängliche Fehlstellengeometrie als Ausgangsfehlstellengeometrie bestimmt wird. Dies erfolgt wie vorgeschrieben auf Basis eines neuronalen Netzwerkes, in welches die Referenzdatensätze als Eingangsdatensätze eingelesen werden.

Die Lösung des neuronalen Netzwerks wird dann als eine oder mehrere Ausgangsfehlstellengeometrien $x_1 ... x_n$ für die einzelnen Expertenmodule zur Verfügung gestellt. Vorab kann mit dem Ziel einer Reduzierung der Rechenzeit die Anzahl der Parameterwerte, die die Fehlstellengeometrien beschreiben, so klein wie möglich gehalten werden. Dies wird beispielsweise über eine dynamische Gitteranpassung erreicht. Da die Anzahl der Tiefenwerte der Anzahl der Knotenpunkte im Defektgitter 5 entspricht, kann die Anzahl der Knoten gleichzeitig auch die Anzahl der Fehlstellenparameter sein. Beginnend bei einem vergleichsweise groben Gitter wird dieses sukzessive in relevanten Bereichen verfeinert.

Beispielhaft kann für einen vorgegebenen Knotenpunktabstand von beispielsweise 14 mm, einer hiermit einhergehenden Gitterzellengröße von 14 mm x 14 mm und Fehlstellengrenzwerten von 30%, 50% und 80% der Wanddicke eine Verfeinerung in dem relevanten Gitterbereich erreicht werden, wobei diejenigen Zellen sukzessive unterteilt werden, die die vorstehenden Tiefenwerte überschreiten. Die Gitterdeformation korreliert dann mit der angenommenen Fehlstellengeometrie, d.h. in Bereichen großer Gradienten befindet sich eine größere Anzahl an Gitterpunkten.

Nachdem nun ein zentral allen Experten-Routinen zur Verfügung gestelltes Fehlstellengitter selektiert wurde, wird anschließend in Schritt 14 fehlstellenspezifisch in jeweiligen Experten-Routinen eine neue Experten-Fehlstellengeometrie berechnet und unter 14.1 überprüft, ob diese den weiteren Experten-Routinen zur Verfügung gestellt werden muss. Dies ist dann der Fall, wenn wie vorbeschrieben z.B. eine Fitness-Funktion verbessert wurde und noch kein Stopp-Kriterium die Fehlstellen-Findung beendet. In diesem Fall geht es mit der oder den insbesondere dann allen Experten-Routinen zur Verfügung gestellten Fehlstellengeometrien in der Iteration weiter. Anderenfalls wird in 14.2. das Verfahren mit Bestimmung der Fehlstellengeometrien und insbesondere der Angabe der Genauigkeit der Lösung beendet. Ergänzend kann auf Basis der gefundenen Fehlstellengeometrien der burst pressure berechnet werden.

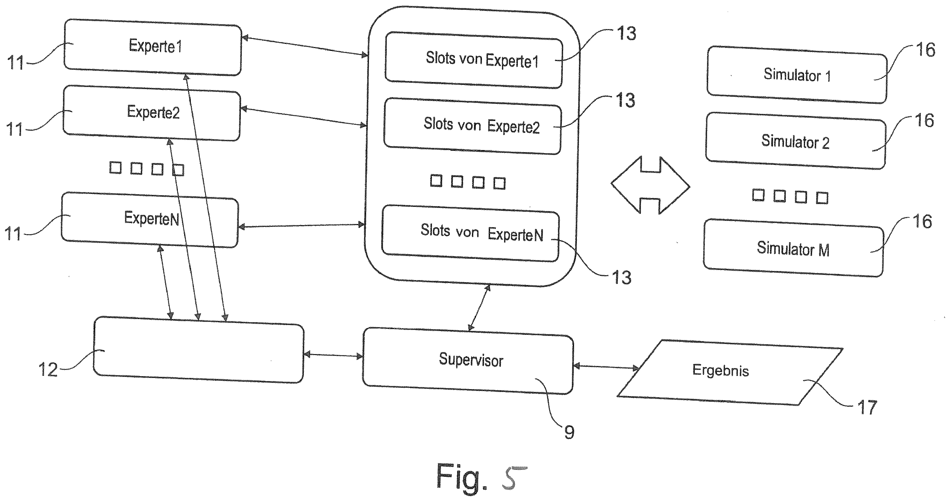

Auf der EDV-Einheit wird gemäß dem erfindungsgemäßen Verfahren der Ablauf des Arbeitsflusses einer Gruppe von Experten-Routinen 11, die miteinander im Wettstreit stehen, simuliert. Hierfür kann das Programm verschiedene Module aufweisen, die unabhängig voneinander und insbesondere nicht miteinander synchronisiert Daten in bestimmte Bereiche der EDV-Einheit einstellen können, damit diese dort weiter verarbeitet werden. Dies erfolgt insbesondere unter Aufsicht einer Überwachungsroutine 9 (Fig. 5). Eine Mehrzahl von Experten-Routinen 11 hält somit in Abhängigkeit von dem vorstehend definierten Erfolg, d.h. z.B. der Anzahl der in einem gemeinsamen Speicherbereich 12 hineingeschriebenen Ausgangsfehlstellengeometrien eine Anzahl von Rechen-Slots 13, um jeweils Experten-Fehlstellengeometrien zu erzeugen und/oder zugehörige MFL-Simulationen durchführen zu können oder im Falle eines unabhängigen MFL-Simulationsmoduls durchführen zu lassen. Dies entspricht dem Block 14 nach Fig. 4, wobei dieser exemplarisch für mehrere Experten-Routinen 11 (Fig. 5) steht. Ausgehend von den einzelnen Rechen-Slots 13 werden gemäß dem vorliegenden Ausführungsbeispiel die Simulationen der zu den einzelnen Experten-Fehlstellengeometrien passenden Messdaten zwecks Erstellung der Experten-Vorhersagedatensätze ebenfalls unter Aufsicht der Überwachungsroutine 9 in den Simulationsmodulen 16 durchgeführt. Je mehr Slots 13 für eine Experten-Routine zur Verfügung steht, desto größer ist der Anteil an EDV-Ressourcen für diese Experten-Routine. Vorzugsweise ist die Anzahl der zur Durchführung von Simulationen vorgesehenen Programmmodule gleich der Anzahl der Slots. Die Überwachungsroutine 9 überwacht die Anzahl der Iterationen und die sich hieraus ergebenden Änderungen der Ausgangsfehlstellengeometrie und überwacht weiter, ob ein zugehöriges Stopp-Kriterium erreicht ist. Anschließend wird das Ergebnis gemäß Block 17, der dem Block 14.2 aus Fig. 4 entspricht ausgegeben.

Die Anzahl der für eine Experten-Routine 11 zur Verfügung stehenden Rechen-Slots 13 und die anschließend zur Verfügung gestellten Simulationsroutinen können dergestalt variieren, dass eine erste Experten-Routine beispielhaft bis zu 50% der für die Rechen-Slots und Simulationsroutinen zur Verfügung stehenden gesamten Rechenzeit ausnutzen kann.

Im Speicherbereich 12 werden wie dargestellt die Ausgangsfehlstellengeometrien gespeichert. Hierbei kann es sich um einen den Experten-Routinen 11 zugänglichen Speicherbereich handeln. Dort können ebenfalls Log-Dateien der Experten- Routinen 11 und Überwachungs-Routine 9 sowie Anweisungen an die Experten-Routinen 11 hinterlegt werden, die von diesen dann selbständig umgesetzt werden. Beispielsweise kann es sich hierbei um einen Interrupt-Befehl handeln, der bei Erreichen des Stopp-Kriteriums gesetzt wird.

Vorzugsweise sind die Experten-Routinen 11 unabhängige Programmmodule, die neue Experten-Fehlstellengeometrien erzeugen und in die Simulationsroutinen 16 einstellen. Weiterhin kann in den Experten-Routinen 11 die eingangs dargestellte Fitnessfunktion auf Basis des Experten-Vorhersagedatensatzes erzeugt und mit dem im Bereich 12 abgelegten Ausgangsvorhersagedatensatz verglichen werden. Sofern die Experten-Vorhersagedatensätze den Referenzdatensätzen insgesamt ähnlicher ist als die im Bereich 12 abgelegten Datensätze, werden diese Experten-Vorhersagedatensätze dann als neue Ausgangs-Vorhersagedatensätze verwendet.

Beispielsweise wird in den Experten-Routinen 11 eine neue Fehlstellengeometrie zufallsbasiert erzeugt. Hierfür können Maschinenlernalgorithmen oder empirische Regeln verwendet werden. Vorteilhafterweise ist jedoch zur weiterhin verbesserten Konvergenz der Lösungen die Realisierung zumindest zweier nach Art der Fehlstelle fehlstellenspezifisch arbeitenden Basis-Experten-Routinen wie nachfolgend beschrieben vorgesehen.

Diese vorzugsweise immer bei einem erfindungsgemäßen Verfahren realisierten Suchstrategien basieren zur Bestimmung einer korrosionsbasierten Fehlstellengeometrie auf einer angenommenen Wahrscheinlichkeitsverteilung $p(x,y)$ von Gitterpunkten, deren Tiefenwert eine maximale Reduktion der Fitnessfunktion ergeben.

Die Wahrscheinlichkeitsfunktion wird verwendet um N Gitterpunkte $(x_n, y_n)$ zu identifizieren. Anstelle von Gitterpunkten $x_n, y_n$ kann auch die vorstehend bereits verwendete Parameterdarstellung der Gruppe von Fehlstellen $(x_1...x_n)$ als Gegenstand der Wahrscheinlichkeitsverteilung angenommen werden, wobei sich zum Zwecke der einfacheren Erklärung bei der Wahrscheinlichkeitsverteilung nachfolgend auf N Gitterpunkte $(x,y)$ bzw. $(x_n, y_n)$ bezogen wird.

An jedem der betrachteten Punkte wird die Tiefenfunktion, die vorliegend die Tiefe D der Korrosion an der Gitterstelle beschreibt, um $\Delta D$ geändert, wobei das Vorzeichen der Änderung zufallsgeneriert verteilt wird. D ist ein Satz von Parametern, die Korrosion beschreiben, und ist eine Untermenge eines gemeinsamen Satzes von Parametern, der die Fehlstellengeometrie beschreibt. Auch die Anzahl der ausgewählten Punkte N kann zufallsbasiert gewählt werden:

$$D_{new}(x,y) = \begin{cases} D(x_n, y_n) \mp \Delta D, \text{für ausgewählte Punkte} \\ D(x,y), \text{sonst} \end{cases}$$

Mit einer Auswahl der Wahrscheinlichkeitsfunktion p (x,y) können unterschiedliche Expertenstrategien realisiert werden, beispielhaft:

$$p(x,y) = \frac{D(x,y)}{\|D(x,y)\|}$$

Dieser Algorithmus realisiert eine Variation der Fehlstellentiefen, bei dem die Gitterpunkte mit der größten Tiefe bevorzugt werden. Eine andere Strategie für eine korrosionsbasierte Entwicklung der Experten-Fehlstellengeometrie kann wie folgt aussehen:

$$p(x,y) = \frac{H_{the\,best}(x,y) - H_m(x,y)}{\|H_{the\,best}(x,y) - H_m(x,y)\|}$$

Ein solcher Algorithmus variiert die Fehlstellengeometrie an Positionen, bei denen das simulierte MFL-Messsignal $H_{the\,best}$ für die beste bekannte Lösung den größten Unterschied zum gemessenen Signal $H_m$ besitzt.

Basierend hierauf können durch Variationen der Anzahl der zu betrachtenden Gitterpunkte und des $\Delta D$ unterschiedliche Experten-Routinen bzw. deren Algorithmen aufgebaut werden. Beispielhaft können die nachfolgenden sechs Experten-Routinen für die Entwicklung von auf Korrosion basierten Fehlstellen verwendet werden:

1. $p(x,y) = \frac{D(x,y)}{\|D(x,y)\|}$ , N = 1 and $\Delta D$ = 1% Wanddicke

2. $p(x,y) = \frac{D(x,y)}{\|D(x,y)\|}$ , N = 2 and $\Delta D$ = 5% Wanddicke

3. $p(x,y) = \frac{D(x,y)}{\|D(x,y)\|}$ , N = 3 and $\Delta D$ = 5% Wanddicke

4. $p(x,y) = \frac{H_{the\,best}(x,y) - H_m(x,y)}{\|H_{the\,best}(x,y) - H_m(x,y)\|}$ , N = 1 und $\Delta D$ = 1% Wanddicke

5. $p(x,y) = \frac{H_{the\,best}(x,y) - H_m(x,y)}{\|H_{the\,best}(x,y) - H_m(x,y)\|}$ , N = 2 und $\Delta D$ = 5% Wanddicke

6. $p(x,y) = \frac{H_{the\,best}(x,y) - H_m(x,y)}{\|H_{the\,best}(x,y) - H_m(x,y)\|}$ , N = 3 und $\Delta D$ = 5% Wanddicke

Für eine Experten-Routine, die für die Variation einer rissbasierten Fehlstelle geeignet ist, können folgende Funktionsvorschriften verwendet werden:

- die Tiefe der Fehlstelle wird zufallsbasiert um einen bestimmten Betrag, vorzugsweise z.B. 1 oder 2 % der Wandstärke des Objekts, verringert oder vergrößert,
- die Position aller Punkte des Risses wird in eine zufällig ausgewählte Richtung variiert, und/oder
- eine den Riss beschreibende Linie wird verlängert oder gekürzt durch die Position der Gitterknoten auf dem Objekt- oder Defektgitter.

Eine Experten-Routine, die einen Laminierdefekt beschreibt, kann nach folgenden Funktionsvorschriften arbeiten:

- Auf Basis der 2D-Parameterbeschreibung eines Laminierdefekts werden die den Gitterknoten zugehörigen Werte schrittweise um 5% in die eine oder andere Richtung variiert mit dem Ziel, die Position der Laminierung zu variieren; dies kann auch nur für eine Teilmenge der Bekannten der 2D-Beschreibung der Lamination,

- zufällig ausgewählte Punkte (Gitterknoten) mit Werten ungleich Null, die in der Nachbarschaft von Punkten mit Werten von Null besitzen, können auf Null gesetzt werden (Reduzierung der Ausdehnung der Laminierung),

- zufällig ausgewählte Gitterpunkte mit Werten von Null, die in der Nachbarschaft von Gitterpunkten mit Werten ungleich Null befindlich sind, können auf den entsprechenden Nachbarschaftswert gesetzt werden, wodurch die Laminierung vergrößert wird, und/oder

- alle Werte in dem Gitter können in eine zufällig ausgewählte Richtung bewegt werden, womit eine Änderung der Position der Laminierung entlang der Pipelineoberfläche einhergeht.

Die in Fig. 5 dargestellte Überwachungs-Routine 9 hat wie beschrieben insbesondere zwei Funktionen: Zum einen wird das Erreichen des Stopp-Kriteriums überprüft und zum zweiten werden die Zuweisung der Ressourcen der EDV-Einheit zwischen den einzelnen Experten basierend auf deren Erfolgen vorgenommen. Ein Maß für den Erfolg ist

$$P = \frac{\Delta F}{N},$$

wobei ΔF die Reduktion der Fitnessfunktion F durch das Ergebnis der jeweiligen Experten-Routine und in diesem Fall nun N die Anzahl der hierfür notwendigen Simulationen ist. Eine Bewertung der n Experten-Routinen kann als

$$R_n = \frac{P_n}{\sum P_i}.$$

angenommen werden. Die Anzahl der Rechen-Slots Ns für eine Experten-Routine in einer Iteration ist dann

$$N_S = \text{int}(R_n\, N_{all}),$$

wobei $N_{all}$ die Anzahl aller verfügbaren Slots ist.

In den Simulations-Routinen 16 werden die jeweiligen zerstörungsfreien Messungen für die Experten-Fehlstellengeometrien simuliert. Eine Experten-Routine kann solange iterieren, bis sie eine Lösung findet, deren Experten-Vorhersagedatensätze besser sind als die im Bereich 12 gespeicherten Ausgangsvorhersagedatensätze. Wenn dies der Fall ist, kann die Experten-Routine 11 ausgehend von der bereits verbesserten Lösung versuchen, weitere bessere Lösungen zu erreichen.

Ein sich ergebende Fehler E für die einzelnen Betrachtungen der simulierten und gemessenen Datensätze kann sich aus den Fehlern der jeweiligen Datensätzen in den einzelnen Kalkulationen ergeben:

$$E = \sum_i \left\| Y_{cal}^i(D) - Y_m^i \right\|,$$

wobei Ym und Ycal die vorbeschriebenen, jeweiligen gemessenen und simulierten Messfelder an den Fehlstellengeometrien (x1...xn) darstellen.

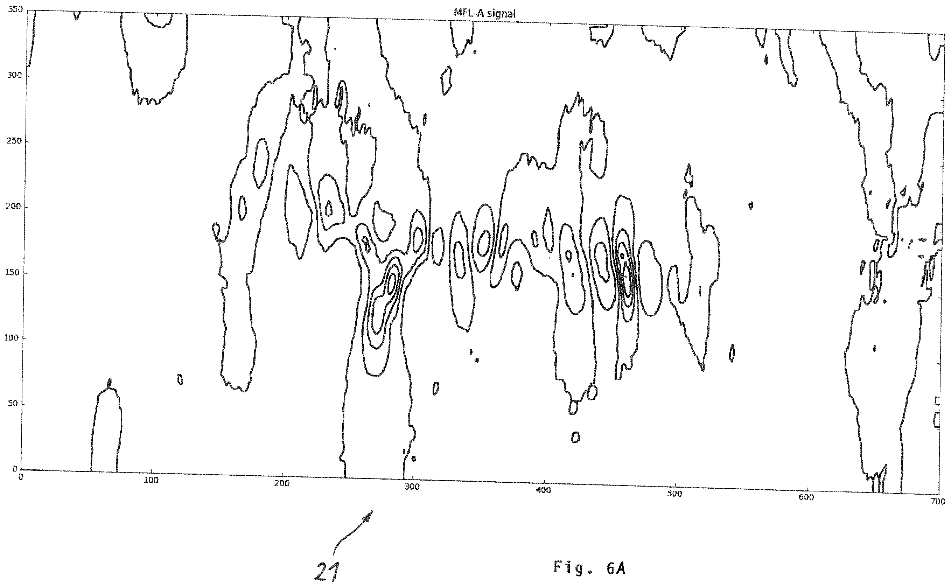

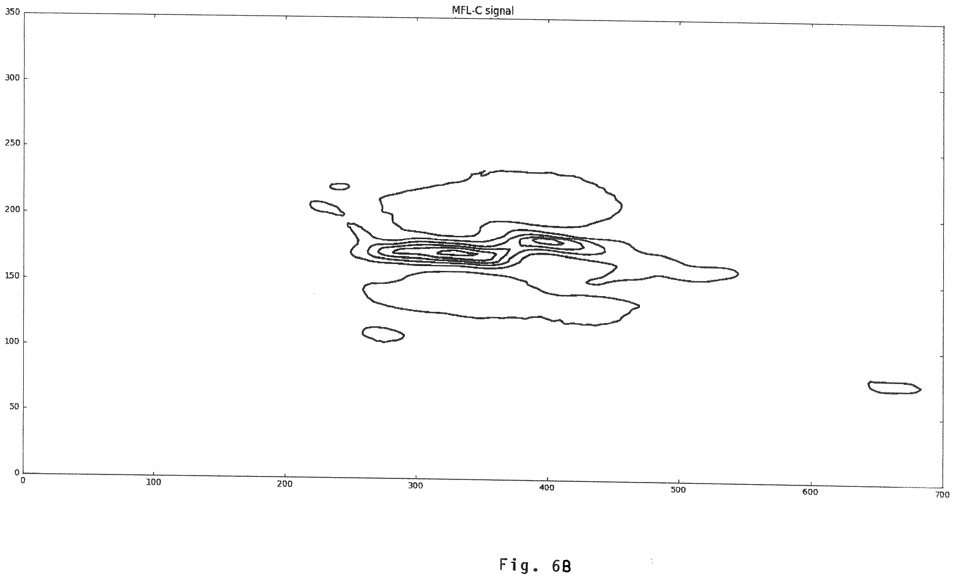

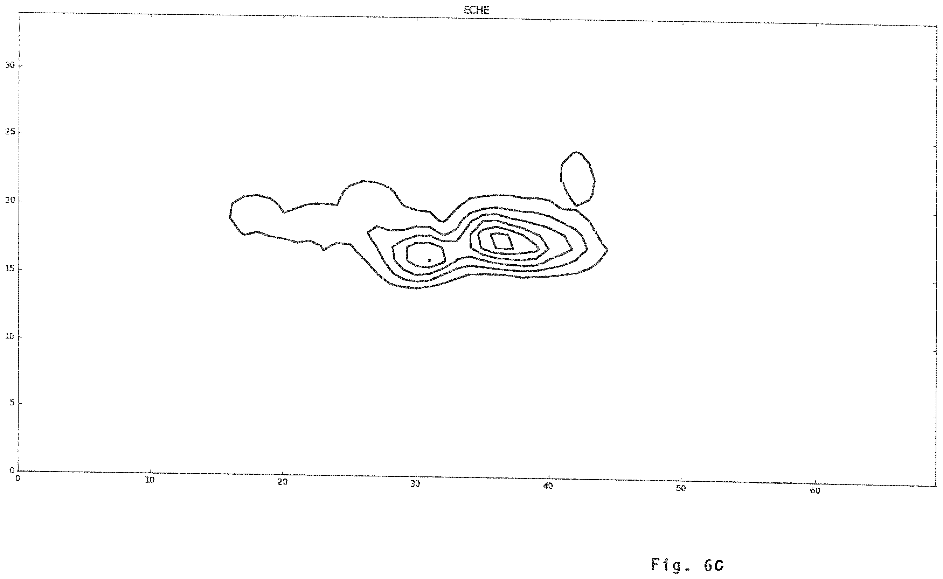

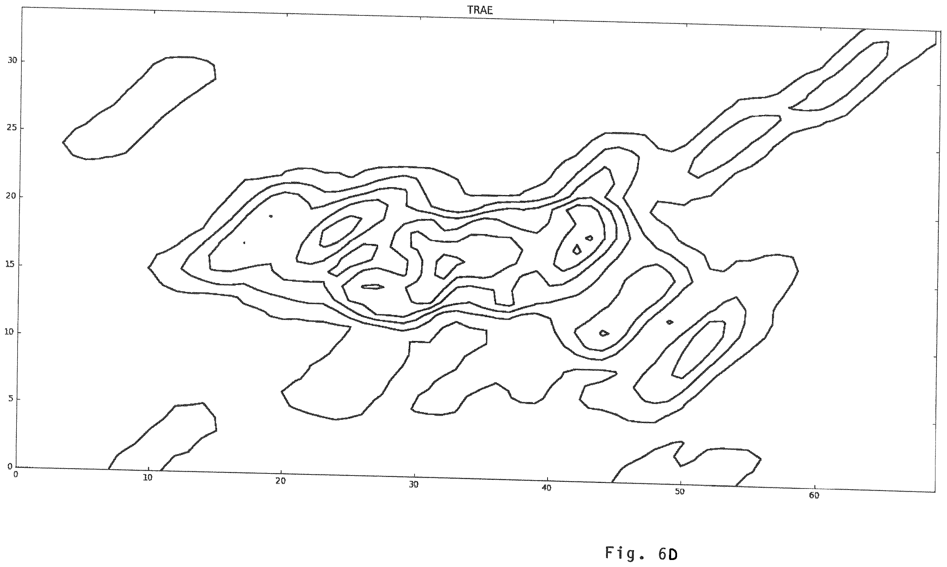

Um die Effizienz des vorgeschlagenen Verfahrens zu demonstrieren, wurde eine Vielzahl von Testszenarien durchgeführt, wobei nachfolgend gemäß den Fig. 6A und 6B die Daten zweier MFL-Inspektionsläufe, die mit voneinander linear unabhängigen Magnetisierungen durchgeführt wurden, verwendet werden. Fig. 6A zeigt bei einer Signalstärke zwischen 22,2 und 30,6 kA/m Daten einer realen MFL-Messung mit in axialer Richtung verlaufender Magnetisierung, während die nach Fig. 6B aus einer in Umfangsrichtung erfolgten Messung (Signalstärke 22,2 bis 91,1 kA/m) resultieren. Die Konturlinien sind bei beiden Abbildungen gleichmäßig über den angegebenen Bereich verteilt. Zusätzlich werden zwei durch ein EMAT-Verfahren gewonnene Datensätze als Referenzdatensätze herangezogen, wobei der in Fig. 6C dargestellte Datensatz das Empfangssignal eines Reflektionen aufgrund von Fehlstellen detektierenden Empfangswandlers und der in Fig. 6D dargestellte Referenzdatensatz das zugehörige Transmissionssignal eines Referenzwandlers zeigt. Dargestellt sind jeweils normierte Signale in Form von Counts. Beide EMAT-Datensätze werden nach ihrer Aufbereitung, die vorliegend eine Reihe von Fouriertransformationen umfassen, mittels einer jeweiligen Eingangsschicht als Eingangsdaten für ein neuronales Netz zur Verfügung gestellt. Ebenfalls werde die beiden MFL-Datensätze über jeweilige Eingangsschichten dem neuronale Netz zur Verfügung gestellt.

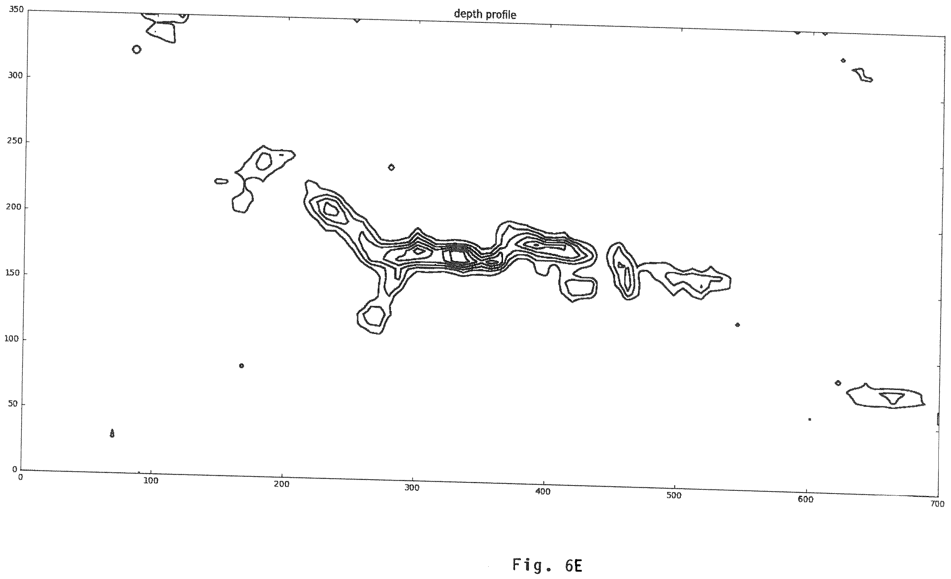

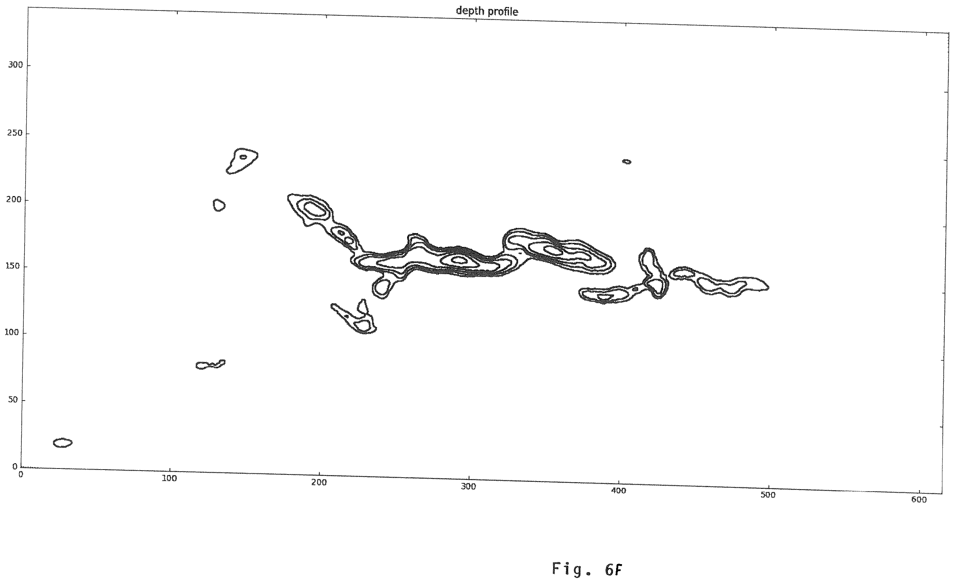

Über das neuronale Netz wurde auf der EDV-Einheit eine anfängliche Fehlstellengeometrie bestimmt, die anschließend iterativ bis zum Erreichen eines Stopp-Kriteriums verbessert wurde. Das Ergebnis des erfindungsgemäßen Verfahrens ist in Fig. 6E dargestellt, welche die Tiefe etwaiger Fehlstellen an der Innenseite des betrachteten Pipeline-Abschnitts zeigt. Aufgrund des erfindungsgemäßen Verfahrens ergibt sich eine große Übereinstimmung mit der durch einen Laserscan ermittelten realen Geometrie (Fig. 6F). Sowohl in Fig. 6E als auch Fig. 6F ist mittels der Konturlinien ein Bereich von 0 bis 60 % Metallverlust der Rohrwand gekennzeichnet. Die Kombination der MFL- und der EMAT-Messdaten im erfindungsgemäßen Verfahren führt vorliegend schneller zu einem Ergebnis als wenn beispielsweise nur MFL-Daten verwendet worden wären. Die Zeitersparnis liegt bei rund 20%. Gleichzeitig zeigt die kombinierte Betrachtung der beiden unterschiedlichen Messverfahren, dass die vorliegend detektierten Fehlstellen rein korrosionsbasiert sind.

Auf Basis der herkömmlichen Betrachtung mit im Stand der Technik etablierter dErmittlung der Fehlstellengeometrie ergibt sich der erwähnte burst pressure von 4744,69 kPa. Auf Basis des erfindungsgemäßen Verfahrens ergibt sich für den MFL-Datensatz die in der Fig. 6F gezeigte Fehlstellengeometrie (Konturlinien bei 2 mm Tiefe) und basierend hierauf ein burst pressure von 8543,46 kPa. Dieser reicht vorliegend bis auf 99,4 % an den burst pressure heran, der aufgrund der per Laserscan ermittelten tatsächlichen Fehlstellengeometrie bestimmt wurde. Demnach kann eine nach dem erfindungsgemäßen Verfahren untersuchte Pipeline mit einem sicheren Betriebsdruck von 6520,53 kPa betrieben werden. Hiermit ergeben sich im Vergleich zu dem sicheren Betriebsdruck von 3621,29 kPa aufgrund der Auswertung nach dem Stand der Technik erhebliche Vorteile für Pipeline-Betreiber. Durch die zusätzliche Verwendung des EMAT-Referenzdatensatzes hat sich vorliegend das Ergebnis im Vergleich zur Betrachtung nur der MFL-Datensätze weder verschlechtert noch verbessert, da gemäß dem erfindungsgemäßen Verfahren im betrachteten Rohrabschnitt keine Risse und keine Laminierung bzw. Laminierdefekte vorhanden waren, die die Betrachtung des burst pressures negativ beeinflusst hätten.

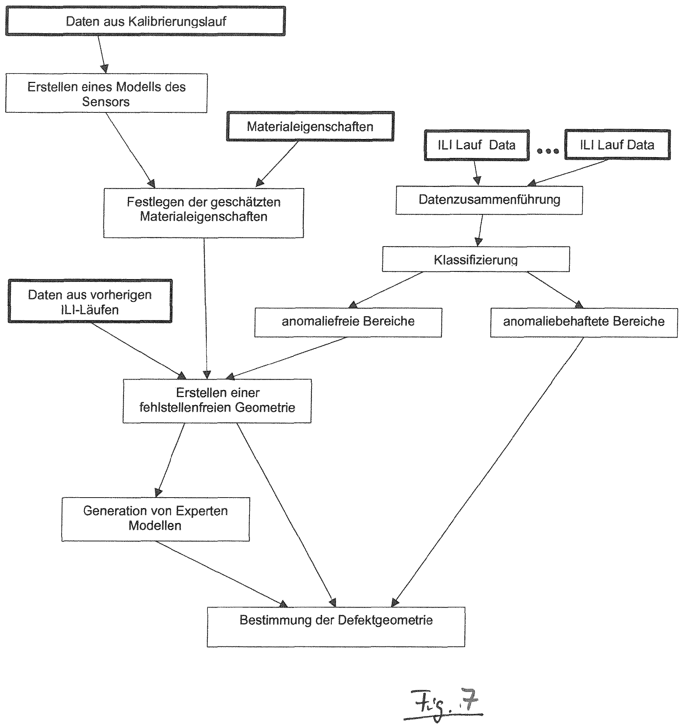

Fig. 7 zeigt nochmal den Ablauf einer möglichen Implementierung des erfindungsgemäßen Verfahrens. Auf Grundlage von Messdaten 20 aus einer oder mehreren Kalibrierungsmessungen mit einem zerstörungsfreien Messverfahren an einem Kalibrierungsobjekt bekannter Geometrie, insbesondere mit Fehlstellen bekannter Geometrie, wird ein Model den für den zerstörungsfrei arbeitenden Sensor 21 erstellt. Mit einer Abschätzung der relevanten Materialeigenschaften des untersuchten Objekts wird in Schritt 22 eine Simulationsroutine eingerichtet. Dies kann durch Vorgabe bekannter Parameter geschehen, die die Materialeigenschaften sowie Eigenschaften des verwendeten Sensors repräsentieren. Alternativ oder zusätzlich kann eine iterative Anpassung der Parameter erfolgen, bis die Ergebnisse der Simulationsroutine für das verwendete zerstörungsfreie Messverfahren auf Basis der bekannten Geometrie des Kalibrierungsobjekts ausreichend genau mit den Messdaten der Kalibrierungsmessung übereinstimmen. Die Simulationsroutine kann auch vorbereitet sein und für mehrere Messungen mittels des zerstörungsfreien Messverfahrens wiederverwendet werden.

Auf Basis einer oder mehrere Messungen mit einem oder mehreren zerstörungsfreien Messverfahren werden ein oder mehrere Referenzdatensätze erstellt. Fig. 7 zeigt in Schritt 2 die Erstellung eines Referenzdatensatzes auf Basis mehrerer Messläufe. Auf Basis des Referenzdatensatzes wird in Schritt 23 eine Klassifizierung durchgeführt in anomaliefreie Bereiche und anomaliebehaftete Bereiche. Zur Unterscheidung anomaliefreier Bereiche von anomaliebehafteten Bereichen können unterschiedliche Kriterien verwendet werden. Durch die Verwendungen von zwei oder mehr Referenzdatensätzen, die auf Basis unterschiedlicher zerstörungsfreier Messverfahren erhalten wurden, kann die Klassifizierung noch einmal verbessert werden, dergestalt, dass einzelne Messverfahren für bestimmte Fehlstellen sensibler sind als für andere.

Auf Grundlage der anomaliefreien Bereiche und unter Verwendung der Simulationsroutine wird in Schritt 24 ein das die intakte Geometrie des Objekts repräsentierendes Objektgitter erstellt. Hierzu können auch Informationen von vorherigen Messläufen in dem dann noch ohne bzw. mit weniger Fehlstellen behaftete Objekt verwendet werden. Hierzu kann das Objektgitter in den anomaliefreien Bereichen erstellt und anschließend durch extrapolieren und/oder interpolieren in die anomaliebehafteten Bereiche vervollständigt werden. Es ist auch denkbar, eine Interpolation und/oder Extrapolation auf Basis der Referenzdatensätze aus den anomaliefreien Bereichen in die anomaliebehafteten Bereiche vorzunehmen.

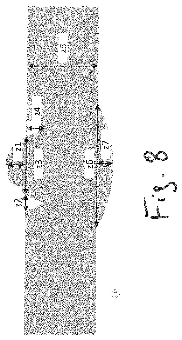

Die Erstellung des Objektgitters erfolgt durch einen iterativen Prozess. Es wird ein erstes Ausgangsobjektgitter geraten oder beispielsweise auf Basis einer geschätzten Objektgeometrie vorgegeben. Diese wird in einem iterativen Verfahren angepasst. Ein Ausgangsobjektgitter kann beispielsweise eine Schweißnaht gemäß der in Fig. 8 im Querschnitt dargestellten aufweisen. Das Ausgangsgitter kann solange iterativ angepasst werden, bis es eine die Schweißnaht repräsentierende Form aufweist.

Um das Verfahren zu beschleunigen kann insbesondere auch eine parametrische Beschreibung der Schweißnaht durch ein parametrisches Geometriemodell verwendet werden. Fig. 8 zeigt ein solches parametrisches Geometriemodell. In diesem Modell wird die Form der Schweißnaht durch eine geringe Anzahl an Parametern, vorliegend sieben beschrieben. Die Parameter beschreiben die Wandstärke des Objekts ($z5$), die jeweilige Ausdehnung der Schweißnaht auf beiden Seiten ($z3$, $z6$), die Schweißnahtüberhöhung ($z1$, $z7$), sowie Breite und Tiefe von Kerben an der Schweißnaht ($z2$, $z4$). Das Objektgitter kann somit im Bereich der Schweißnaht durch Anpassung einer geringen Anzahl von Parametern verändert werden. Hierbei nutzt man vorbekannte Informationen über eine generelle Form eins Objektbereichs, hier einer Schweißnaht, aus. Zusätzliche können für einzelne Parameter Randbedingungen vorgegeben werden. Hierdurch werden physikalisch unsinnige oder unmögliche Ergebnisse ausgeschlossen. In Fig. 8 können die Parameter $z2$, $z3$, $z5$ und $z6$ zum Beispiel nicht sinnvoll negativ sein, $z4$ kann sinnvoll nicht größer als $z5$ sein usw. Die Parameterwerte können durch das folgende Optimierungsproblem bestimmt werden:

$$\{z_1 \dots z_n\} = arg\,min \sum_i |Y_{cal}^i(z_1 \dots z_n) - Y_m^i|$$

unter Randbedingunen für $\{z_1 \dots z_n\}$

mit $Y_m^i$ gemessenes Signal der i-ten Messung, $Y_{cal}^i$ berechnetes Signal für die i-Messung. Werte für die Parameter können über ableitungsfreie Optimierungsalgorithmen, beispielsweise mittels random search, bestimmt werden. Um das Verfahren zu beschleunigen, kann eine Veränderbarkeit der Parameter in festen Schritten, vorzugsweise definiert als Funktion der Wandstärke, festgelegt werden. Beispielsweise kann eine Veränderung in Schritten erfolgen, die 1% der Wandstärke betragen.

Aufgrund des erfindungsgemäßen Verfahrens lassen sich der Zustand eines Rohres und damit der für einen sicheren Betrieb der Pipeline angebbare Druck deutlich realistischer angeben, während die Betriebssicherheit nach wie vor gewährleistet ist. Durch das erfindungsgemäße Verfahren mit den um Ressourcen der EDV-Einheit konkurrierenden Experten-Routinen kann ein solches Ergebnis schneller oder zumindest in gleicher Auswertezeit wie im Stand der Technik den Betreibern von Pipelines zur Verfügung gestellt werden.

**Patentansprüche**

1. Verfahren zur Bestimmung der Geometrie einer oder mehrerer realer, untersuchter Fehlstellen eines metallischen, insbesondere magnetisierbaren Objekts, insbesondere eines Rohres oder eines Tanks, mittels zumindest zweier auf Basis unterschiedlicher, zerstörungsfreier Messverfahren erzeugter Referenzdatensätze des Objekts, wobei das Objekt zumindest teilweise auf einem oder durch ein zumindest zweidimensionales, vorzugsweise dreidimensionales, Objektgitter, in einer EDV-Einheit dargestellt wird, wobei eine Ausgangsfehlstellengeometrie, insbesondere auf dem Objektgitter oder einem zumindest zweidimensionalen Defektgitter, durch Inversion von zumindest Teilen der Referenzdatensätze, insbesondere durch zumindest ein für diese Aufgabe trainiertes neuronales Netz (NN), erzeugt wird, auf Basis der Ausgangsfehlstellengeometrie durch eine Simulationsroutine jeweils ein Vorhersagedatensatz für die bei der Erstellung der Referenzdatensätze verwendeten zerstörungsfreien Messverfahren errechnet wird, ein Vergleich von zumindest Teilen der Vorhersagedatensätze mit zumindest Teilen der Referenzdatensätze erfolgt und in Abhängigkeit von zumindest einem Genauigkeitsmaß das Verfahren zur Bestimmung der Geometrie der Fehlstelle beendet wird oder eine iterative Anpassung der Ausgangsfehlstellengeometrie an die Geometrie der realen Fehlstelle(n) erfolgt.

2. Verfahren nach Anspruch 1, **dadurch gekennzeichnet, dass** eine Trainingssimulationsroutine durch Simulation auf Basis verschiedener Trainingsgeometrien Trainingsdaten generiert, mit denen ein neuronales Netz (NN) zur Inversion der Messdaten trainiert wird.

3. Verfahren nach einem der Ansprüche 1 oder 2, **dadurch gekennzeichnet, dass** ein neuronales Netz oder das neuronale Netz (NN) auf Basis von Daten aus einer Datenbank, die simulierte Messungen enthält, trainiert wird.

4. Verfahren nach einem der Ansprüche 1 bis 3, **dadurch gekennzeichnet, dass** durch einen feature extractor (FE), der vorzugsweise als weiteres neuronales Netz ausgebildet ist, aus einem Referenzdatensatz Eingangsdaten für das neuronales Netz (NN) extrahiert werden.

5. Verfahren nach einem der Ansprüche 1 bis 4, **dadurch gekennzeichnet, dass** mittels des neuronalen Netzes (NN) Eingangsdaten mit einer zweidimensionalen Ortsauflösung in eine Ausgangsfehlstellengeometrie mit dreidimensionaler Ortsauflösung überführt werden.

6. Verfahren nach einem der Ansprüche 1 bis 5, **dadurch gekennzeichnet, dass** durch das neuronale Netz (NN) eine Klassifikation von Fehlstellen erfolgt.

7. Verfahren nach Anspruch einem der Ansprüche 1 bis 6, **dadurch gekennzeichnet, dass** als erster Referenzdatensatz ein Datensatz auf Basis eines MFL-, Wirbelstrom-, EMAT- oder Ultraschall-Messverfahrens und zumindest ein weiterer Referenzdatensatz ein auf Basis eines weiteren aus dieser Gruppe von Messverfahren stammenden Messverfahrens erzeugter Datensatz verwendet wird.

8. Verfahren nach einem der Ansprüche 1 bis 7, **dadurch gekennzeichnet, dass** die iterative Anpassung der Ausgangsfehlstellengeometrie an die Geometrie der realen Fehlstelle(n) mittels der EDV-Einheit und mittels zumindest einer, vorzugsweise mehrerer, insbesondere im Wettbewerb und weiter insbesondere parallel zueinander laufender Experten-Routinen (11) erfolgt,

- wobei in der bzw. den jeweiligen Experten-Routinen (11) mittels wenigstens eines eigenen Algorithmus und auf Basis der Ausgangsfehlstellengeometrie eine jeweilige Experten-Fehlstellengeometrie erzeugt wird,
- auf Basis der jeweiligen Experten-Fehlstellengeometrie jeweilige Experten-Vorhersagedatensätze durch Simulation oder Zuweisung einer zum jeweiligen Referenzdatensatz passenden Messung bestimmt werden,
- und die den jeweiligen Experten-Vorhersagedatensätzen zugrunde liegende Experten-Fehlstellengeometrie dann wenigstens einer, insbesondere allen der Experten-Routinen (11) als neue Ausgangsfehlstellengeometrie zur weiteren Anpassung an die Geometrie der realen Fehlstelle(n) zur Verfügung gestellt wird,

wenn die Experten-Vorhersagedatensätze einer jeweiligen Experten-Routine den jeweiligen Referenzdatensätzen ähnlicher sind als die Ausgangsvorhersagedatensätze und/oder eine die zumindest zwei Experten-Vorhersagedatensätze berücksichtigende Fitnessfunktion verbessert ist,

- und anschließend die zur neuen Ausgangsfehlstellengeometrie gehörenden Experten-Vorhersagedatensätze als neue Ausgangsvorhersagedatensätze verwendet werden,
- wobei die iterative Anpassung mittels der Experten-Routinen (11) solange erfolgt, bis ein Stopp-Kriterium erfüllt ist.

9. Verfahren nach Anspruch 8, **dadurch gekennzeichnet, dass** die iterative Anpassung der Ausgangsfehlstellengeometrie an die Geometrie der realen Fehlstelle(n) mittels zumindest einer weiteren Experten-Routine (11) erfolgt, wobei die Experten-Routinen (11) dergestalt im Wettbewerb zueinander laufen, dass eine Verteilung der Ressourcen der EDV-Einheit an eine jeweilige Experten-Routine insbesondere in Form von Rechenzeit, vorzugsweise CPU- und/oder GPU-Zeit, in Abhängigkeit einer Erfolgsquote, bei der insbesondere die Anzahl der von dieser Experten-Routine berechneten und für eine oder mehrere andere Experten-Routinen (11) zur Verfügung gestellten Ausgangsfehlstellengeometrien berücksichtigt wird, und/oder in Abhängigkeit einer Reduktion der Fitnessfunktion, bei der insbesondere die Anzahl der für die Reduktion erzeugten Experten-Vorhersagedatensätze berücksichtigt wird, erfolgt.

10. Verfahren nach Anspruch 8 oder 9, **dadurch gekennzeichnet, dass** als Stopp-Kriterium ein Vergleich der Variation des Experten-Vorhersagedatensatzes mit der Messstreuung des realen Datensatzes verwendet wird.

11. Verfahren nach einem der Ansprüche 8 bis 10, **dadurch gekennzeichnet, dass** in der oder den Experten-Routinen (11) zur Erzeugung der Experten-Fehlstellengeometrie unterschiedliche und fehlstellenspezifische Variationen vorgenommen werden, wobei insbesondere eine erste Experten-Routine (11) zur Variation von Rissen, eine weitere zur Variation von Korrosion und/oder eine weitere zur Variation von Laminierdefekten vorgesehen ist.

12. Verfahren nach einem der vorherigen Ansprüche, **dadurch gekennzeichnet, dass** zur Bestimmung des Objektgitters zunächst auf Basis von zumindest Teilen der Referenzdatensätze eine Klassifizierung von anomaliefreien Bereichen und anomaliebehafteten Bereichen des Objekts erfolgt, wobei insbesondere auf Basis von vorbekannten Informationen über das Objekt ein Ausgangsobjektgitter erstellt wird, unter Verwendung des Ausgangsobjektgitters Vorhersagedatensätze für die jeweiligen zerstörungsfreien Messverfahren errechnet werden, ein Vergleich von zumindest Teilen der Vorhersagedatensätze mit jeweiligen Teilen der Referenzdatensätze unter Ausschluss der anomaliebehafteten Bereiche erfolgt und in Abhängigkeit von zumindest einem Genauigkeitsmaß das Ausgangsobjektgitter als die Geometrie des Objekts beschreibendes Objektgitter verwendet wird oder mittels der EDV-Einheit eine iterative Anpassung des Ausgangsobjektgitters an die Geometrie des Objekts in den anomaliefreien Bereichen erfolgt.

13. Verfahren nach Anspruch 12, **dadurch gekennzeichnet, dass** in der iterativen Anpassung des Ausgangsobjektgitters ein neues Ausgangsobjektgitter erstellt und für dieses neue Vorhersagedatensätze errechnet werden, sowie ein Vergleich von zumindest Teilen der neuen Vorhersagedatensätze mit entsprechendenTeilen der Referenzdatensätze unter Ausschluss der anomaliebehafteten Bereiche erfolgt bis ein Objektstopp-Kriterium erfüllt ist, wobei das dann vorliegende Ausgangsobjektgitter als die Geometrie des Objekts beschreibendes Objektgitter verwendet wird.

**14.** Verfahren nach einem der vorherigen Ansprüche 12 oder 13, **dadurch gekennzeichnet, dass** bei der Klassifizierung eine Zuordnung eines anomaliefreien Bereichs zu wenigstens einem vordefinierten lokalen Element des Objektes erfolgt und dieses bei der Erstellung des Ausgangsobjektgitters verwendet oder in das Ausgangsobjektgitter eingefügt wird.

**15.** Verfahren nach Anspruch 14, **dadurch gekennzeichnet, dass** das lokale Element, welches insbesondere in Form einer Schweißnaht ausgebildet ist, mittels eines parametrischen Geometriemodels beschrieben wird.

**16.** Verfahren zur Bestimmung einer Belastbarkeitsgrenze eines zumindest im Betrieb druckbelasteten und insbesondere als Öl-, Gas- oder Wasserpipeline ausgebildeten Objekts, bei dem ein eine oder mehrere Fehlstelle(n) beschreibender Datensatz als Eingangsdatensatz in einer Berechnung der Belastbarkeitsgrenze verwendet wird, **dadurch gekennzeichnet, dass** der Eingangsdatensatz zunächst gemäß einem Verfahren nach einem der vorherigen Ansprüche bestimmt wird.

**Claims**

**1.** Method for determining the geometry of one or more, real, examined defects in a metallic, more particularly magnetizable object, in particular a pipe or a tank, by means of at least two reference datasets of the object generated on the basis of different, non-destructive measurement methods,
wherein the object is at least partially represented on or by an at least two-dimensional, preferably three-dimensional, object mesh on a computer unit, wherein an initial defect geometry is generated, in particular on the object mesh or on an at least two-dimensional defect mesh, by inverting at least parts of the reference datasets, in particular by way of at least one neural network (NN) trained for this task, wherein a respective prediction dataset for the non-destructive measurement methods used during the creation of the reference datasets is calculated on the basis of the initial defect geometry by way of a simulation routine, wherein a comparison is carried out between at least parts of the prediction datasets and at least parts of the reference datasets, and wherein, on the basis of at least one accuracy measure, the method for determining the geometry of the defect is terminated or an iterative adjustment of the initial defect geometry to the geometry of the real defect(s) is implemented.

**2.** Method according to Claim 1, **characterized in that** a training simulation routine generates training data by simulation on the basis of various training geometries, the training data being used to train a neural network (NN) to invert the measurement data.

**3.** Method according to either of Claims 1 and 2, **characterized in that** a neural network or the neural network (NN) is trained on the basis of data from a database containing simulated measurements.

**4.** Method according to any one of Claims 1 to 3, **characterized in that** input data for the neural network (NN) are extracted from a reference dataset by way of a feature extractor (FE), which preferably is designed as a further neural network.

**5.** Method according to any one of Claims 1 to 4, **characterized in that** input data with a two-dimensional spatial resolution are transferred into an initial defect geometry with a three-dimensional spatial resolution by means of the neural network (NN).

**6.** Method according to any one of Claims 1 to 5, **characterized in that** defects are classified by the neural network (NN).

**7.** Method according to any one of Claims 1 to 6, **characterized in that** a dataset based on an MFL, eddy current, EMAT or ultrasonic measurement method is used as first reference dataset and a dataset generated on the basis of a further measurement method originating from this group of measurement methods is used as at least one further reference dataset.

**8.** Method according to any one of Claims 1 to 7, **characterized in that** the iterative adjustment of the initial defect geometry to the geometry of the real defect(s) is implemented by means of the computer unit and by means of at least one expert routine (11), preferably by means of a plurality of expert routines (11) which more particularly are executed in competition with one another and further particularly are executed in parallel with one another,

- wherein a respective expert defect geometry is generated in the expert routine (11) or in the respective expert routines (11) by means of at least one dedicated algorithm and on the basis of the initial defect geometry,
- respective expert prediction datasets are determined on the basis of the respective expert defect geometry by simulation or assignment of a measurement fitting to the respective reference dataset,
- and the expert defect geometry underlying the respective expert prediction datasets is then made available to at least one expert routine (11), in particular to all of the expert routines (11), as a new initial defect geometry for further adjustment to the geometry of the real defect(s), if the expert prediction datasets of a respective expert routine are more similar to the respective reference datasets than the initial prediction datasets and/or a fitness function that takes account of the at least two expert prediction datasets is improved,
- and subsequently the expert prediction datasets belonging to the new initial defect geometry are used as new initial prediction datasets,
- wherein the iterative adjustment by means of the expert routines (11) is carried out until a stop criterion is met.

9. Method according to Claim 8, **characterized in that** the iterative adjustment of the initial defect geometry to the geometry of the real defect(s) is implemented by means of at least one further expert routine (11), wherein the expert routines (11) are executed in competition with one another, in such a way that the resources of the computer unit are distributed to a respective expert routine, in particular in the form of computing time, preferably CPU and/or GPU time, depending on a success rate, in which in particular the number of the initial defect geometries calculated by this expert routine and made available to one or more other expert routines (11) is taken into account, and/or depending on a reduction in the fitness function, in which in particular the number of the expert prediction datasets generated for the reduction is taken into account.

10. Method according to Claim 8 or 9, **characterized in that** a comparison of the variation of the expert prediction dataset with the measured distribution of the real dataset is used as a stop criterion.

11. Method according to any one of Claims 8 to 10, **characterized in that** different and defect-specific variations are carried out in the expert routine or routines (11) for generating the expert defect geometry, wherein in particular a first expert routine (11) is provided for varying cracks, a further expert routine is provided for varying corrosion and/or a further expert routine is provided for varying lamination defects.

12. Method according to any one of the preceding claims, **characterized in that**, to determine the object mesh, there initially is a classification of anomaly-free regions and anomaly-afflicted regions of the object on the basis of at least parts of the reference datasets, wherein an initial object mesh is created in particular on the basis of information about the object known in advance, prediction datasets for the respective non-destructive measurement methods are calculated using the initial object mesh, a comparison is made between at least parts of the prediction datasets and respective parts of the reference datasets while excluding the anomaly-afflicted regions, and, depending on at least one accuracy measure, the initial object mesh is used as the geometry of the object-describing object mesh or the computer unit is used to iteratively adjust the initial object mesh to the geometry of the object in the anomaly-free regions.

13. Method according to Claim 12, **characterized in that** a new initial object mesh is created within the scope of the iterative adjustment of the initial object mesh and new prediction datasets are calculated for this new initial object mesh, and a comparison is made between at least parts of the new prediction datasets and corresponding parts of the reference datasets while excluding the anomaly-afflicted regions until an object stop criterion has been met, wherein the initial object mesh then available is used as the object mesh describing the geometry of the object.

14. Method according to either of preceding Claims 12 and 13, **characterized in that** during the classification there is an assignment of an anomaly-free region to at least one predefined local element of the object, and the latter is used when creating the initial object mesh or inserted into the initial object mesh.

15. Method according to Claim 14, **characterized in that** the local element, configured in the form of a weld seam in particular, is described by means of a parametric geometry model.

16. Method for determining a load limit of an object that is pressure-loaded at least during operation and in particular designed as an oil, gas or water pipeline, wherein a dataset describing one or more defect(s) is used as an input dataset in a calculation of the load limit, **characterized in that** the input dataset is initially determined in accordance with a method according to any one of the preceding claims.

**Revendications**

1. Procédé de détermination de la géométrie d'un ou plusieurs points de défaut réels examinés d'un objet métallique, notamment magnétisable, en particulier d'un tube ou d'un réservoir, au moyen d'au moins deux jeux de données de référence de l'objet générés sur la base de procédés de mesure non destructifs différents, l'objet étant représenté au moins partiellement sur ou par une grille d'objet au moins bidimensionnelle, de préférence tridimensionnelle, dans une unité informatique, une géométrie de point de défaut initiale, notamment sur la grille d'objet ou une grille de défaut au moins bidimensionnelle, étant générée par inversion d'au moins des parties des jeux de données de référence, notamment par au moins un réseau neuronal (NN) entraîné pour cette tâche, un jeu de données de prédiction étant respectivement calculé sur la base de la géométrie de point de défaut initiale par une routine de simulation pour les procédés de mesure non destructifs utilisés lors de la création des jeux de données de référence, une comparaison d'au moins des parties des jeux de données de prédiction avec au moins des parties des jeux de données de référence étant effectuée et, en fonction d'au moins une cote de précision, le procédé de détermination de la géométrie du point de défaut prenant fin ou une adaptation itérative de la géométrie de point de défaut initiale à la géométrie du ou des points de défaut réels étant effectuée.

2. Procédé selon la revendication 1, **caractérisé en ce qu'**une routine de simulation d'entraînement génère, par simulation sur la base de différentes géométries d'entraînement, des données d'entraînement avec lesquelles un réseau neuronal (NN) est entraîné pour l'inversion des données de mesure.

3. Procédé selon l'une des revendications 1 ou 2, **caractérisé en ce qu'**un réseau neuronal ou le réseau neuronal (NN) est entraîné sur la base de données issues d'une base de données qui contient des mesures simulées.

4. Procédé selon l'une des revendications 1 à 3, **caractérisé en ce que** des données d'entrée pour le réseau neuronal (NN) sont extraites à partir d'un jeu de données de référence par un extracteur de caractéristique (FE), lequel est de préférence réalisé sous la forme d'un réseau neuronal supplémentaire.

5. Procédé selon l'une des revendications 1 à 4, **caractérisé en ce que** des données d'entrée ayant une résolution spatiale bidimensionnelle sont converties au moyen du réseau neuronal (NN) en une géométrie de point de défaut initiale ayant une résolution spatiale tridimensionnelle.

6. Procédé selon l'une des revendications 1 à 5, **caractérisé en ce qu'**une classification des points de défaut est effectuée par le réseau neuronal (NN).

7. Procédé selon l'une des revendications 1 à 6, **caractérisé en ce qu'**un jeu de données sur la base d'un procédé de mesure MFL, à courant de Foucault, EMAT ou à ultrasons est utilisé en tant que premier jeu de données de référence et un jeu de données généré sur la base d'un procédé de mesure supplémentaire issu de ce groupe de procédés de mesure en tant qu'au moins un jeu de données de référence supplémentaire.

8. Procédé selon l'une des revendications 1 à 7, **caractérisé en ce que** l'adaptation itérative de la géométrie de point de défaut initiale à la géométrie du ou des points de défaut réels est effectuée au moyen de l'unité informatique et au moyen d'au moins une, de préférence plusieurs routines expertes (11) fonctionnant notamment en concurrence et en outre en particulier en parallèle les unes avec les autres,

   - une géométrie de point de défaut experte étant générée dans la ou les routines expertes (11) respectives au moyen d'au moins un algorithme propre et sur la base de la géométrie de point de défaut initiale,
   - des jeux de données de prédiction d'expert respectifs étant déterminés sur la base de la géométrie de point de défaut experte respective par simulation ou affectation d'une mesure correspondant au jeu de données de référence respectif,
   - et la géométrie de point de défaut experte sur laquelle s'appuient les jeux de données de prédiction d'expert respectifs étant ensuite mise à disposition d'au moins une, de préférence de toutes les routines expertes (11) en tant que nouvelle géométrie de point de défaut initiale en vue d'une adaptation supplémentaire à la géométrie du ou des points de défaut réels, lorsque les jeux de données de prédiction d'expert d'une routine experte respective sont plus similaires aux jeux de données de référence respectifs que les jeux de données de prédiction initiaux et/ou une fonction d'adaptation qui tient compte des au moins deux jeux de données de prédiction d'expert est améliorée,
   - et ensuite les jeux de données de prédiction d'expert qui appartiennent à la nouvelle géométrie de point de défaut initiale étant ensuite utilisés comme nouveaux jeux de données de prédiction initiaux,

- l'adaptation itérative au moyen des routines expertes (11) étant effectuée jusqu'à ce qu'un critère d'arrêt soit satisfait.

9. Procédé selon la revendication 8, **caractérisé en ce que** l'adaptation itérative de la géométrie de point de défaut initiale à la géométrie du ou des points de défaut réels est effectuée au moyen d'au moins une routine experte (11) supplémentaire, les routines expertes (11) étant exécutées en concurrence les unes avec les autres de telle sorte qu'une répartition des ressources de l'unité informatique à une routine experte respective s'effectue notamment sous la forme de temps de calcul, de préférence de temps de CPU et/ou de GPU, en fonction d'un taux de réussite, avec lequel est notamment prix en compte le nombre de géométries de point de défaut initiales calculées par cette routine experte et mises à disposition pour une ou plusieurs autres routines expertes (11), et/ou en fonction d'une réduction de la fonction d'adaptation, avec laquelle est notamment pris en compte le nombre de jeux de données de prédiction d'expert générés pour la réduction.

10. Procédé selon la revendication 8 ou 9, **caractérisé en ce que** le critère d'arrêt utilisé et une comparaison de la variation du jeu de données de prédiction d'expert avec la dispersion des mesures du jeu de données réel.

11. Procédé selon l'une des revendications 8 à 10, **caractérisé en ce que** des variations différentes et spécifiques aux points de défaut sont appliquées dans la ou les routines d'expert (11) en vue de générer la géométrie de point de défaut d'expert, une première routine experte (11) étant notamment prévue pour la variation des fissures, une autre pour la variation de la corrosion et/ou une autre pour la variation des défauts de stratification.

12. Procédé selon l'une des revendications précédentes, **caractérisé en ce que** pour la détermination de la grille d'objet, une classification des zones exemptes d'anomalie et des zones qui présentent une anomalie de l'objet est tout d'abord effectuée en se basant au moins sur des parties des jeux de données de référence, une grille d'objet initiale étant créée notamment sur la base d'informations préalablement connues à propos de l'objet, des jeux de données de prédiction étant calculés pour le procédé de mesure non destructif respectif en utilisant la grille d'objet initiale, une comparaison d'au moins des parties des jeux de données de prédiction avec au moins des parties des jeux de données de référence étant effectuée en excluant les zones qui présentent une anomalie et la grille d'objet initiale étant utilisée en fonction d'au moins une cote de précision en tant que grille d'objet qui décrit la géométrie de l'objet ou une adaptation itérative de la grille d'objet initiale à la géométrie de l'objet étant effectuée au moyen de l'unité informatique dans les zones exemptes d'anomalie.

13. Procédé selon la revendication 12, **caractérisé en ce qu'**une nouvelle grille d'objet initiale est créée dans l'adaptation itérative de la grille d'objet initiale et de nouveaux jeux de données de prédiction sont calculés pour celle-ci, et une comparaison d'au moins des parties des nouveaux jeux de données de prédiction avec des parties correspondantes des jeux de données de référence est effectuée en excluant les zones qui présentent une anomalie jusqu'à ce qu'un critère d'arrêt d'objet soit rempli, la grille d'objet initiale alors présente étant utilisée en tant que grille d'objet décrivant la géométrie de l'objet.

14. Procédé selon l'une des revendications précédentes 12 ou 13, **caractérisé en ce qu'**une affectation d'une zone exempte d'anomalie à au moins un élément local prédéfini de l'objet est effectuée lors de la classification et celle-ci est utilisée lors de la création de la grille d'objet initiale ou insérée dans la grille d'objet initiale.

15. Procédé selon la revendication 14, **caractérisé en ce que** l'élément local, qui est notamment réalisé sous la forme d'un cordon de soudure, est décrit au moyen d'un modèle géométrique paramétrique.

16. Procédé de détermination d'une limite de capacité de charge d'un objet soumis à une pression au moins pendant le fonctionnement et notamment réalisé sous la forme d'un oléoduc, d'un gazoduc ou d'un pipeline à eau, avec lequel un jeu de données décrivant un ou plusieurs points défauts est utilisé en tant qu'ensemble de données d'entrée dans un calcul de la limite de capacité de charge, **caractérisé en ce que** le jeu de données d'entrée est tout d'abord déterminé conformément à un procédé selon l'une des revendications précédentes.

Referenzdatensätze

EMAT
Datensatz

MFL
Datensatz

FE

FE

NN

Ausgangsfehlstellengeometrie

Fig. 1

simulierte Messsdaten

*32*

Zuzuweisende Datenpunkte

*34*

Neuronales Netz Eingangsschicht

Interpolation

nächste
zuweisen

Simuliere
Fehlstelle

*37*

Training
neuronales Netz

Generische Fehlstellenbeschreibung

*30*

Zuweisung

*33*

Neuronales Netz Ausgansgschicht

Fig. 2

Datenpunkte aus Messung

Neuronales Netz Eingangsschicht

34

nächste
zuweisen

35

Neuronales Netz
anwenden

36

Zuweisen

30

Generische Fehlstellenbeschreibung

Neuronales Netz Ausgangsschicht

Fig. 3

Fig. 4

Fig. 5

MFL-A signal

21

Fig. 6A

MFL-C signal

Fig. 6B

ECHE

Fig. 6c

TRAE

Fig. 6D

Fig. 6E

depth profile

Fig. 6F

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016007267 A
- US 20160245779 A